(19) Europäisches Patentamt / European Patent Office / Office européen des brevets

(11) **EP 4 104 330 B1**

(12) # EUROPEAN PATENT SPECIFICATION

(45) Date of publication and mention of the grant of the patent:
**09.04.2025 Bulletin 2025/15**

(21) Application number: **21707022.6**

(22) Date of filing: **12.02.2021**

(51) International Patent Classification (IPC):
***H04L 5/00*** *(2006.01)* ***H04L 1/1867*** *(2023.01)*
***H04L 1/08*** *(2006.01)* ***H04B 7/0456*** *(2017.01)*

(52) Cooperative Patent Classification (CPC):
**H04L 5/0048; H04B 7/0456; H04L 1/08; H04L 1/189; H04L 5/0023; H04L 5/0044; H04L 5/0091; H04L 5/0094**

(86) International application number:
**PCT/IB2021/051217**

(87) International publication number:
**WO 2021/161272 (19.08.2021 Gazette 2021/33)**

(54) **PUSCH RELIABILITY ENHANCEMENTS WITH MULTIPLE TRPS**

VERBESSERUNG DER ZUVERLÄSSIGKEIT BEI PUSCH-ÜBERTRAGUNG MIT MEHREREN TPRS

AMÉLIORATION DE LA FIABILITÉ DE TRANSMISSION DE SIGNAUX DE TPYE PUSCH EN UTILISANT PLUSIEUS SIGNAUX TPRS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.02.2020 US 202062976098 P**

(43) Date of publication of application:
**21.12.2022 Bulletin 2022/51**

(73) Proprietor: **Telefonaktiebolaget LM Ericsson (publ)**
**164 83 Stockholm (SE)**

(72) Inventors:
- **MURUGANATHAN, Siva**
  **Stittsville, Ontario K2S 0R3 (CA)**
- **FRENNE, Mattias**
  **754 43 Uppsala (SE)**
- **GAO, Shiwei**
  **Nepean, Ontario K2J 0H5 (CA)**
- **JÄRMYR, Simon**
  **128 34 Skarpnäck (SE)**
- **NILSSON, Andreas**
  **413 13 Göteborg (SE)**
- **ZHANG, Jianwei**
  **170 62 Solna (SE)**

(74) Representative: **Laqua, Bernd Christian Kurt**
**Wuesthoff & Wuesthoff**
**Patentanwälte und Rechtsanwalt PartG mbB**
**Schweigerstraße 2**
**81541 München (DE)**

(56) References cited:
**EP-A1- 3 567 967**
**EP-B1- 3 567 967**
**WO-A1-2020/091470**
**WO-A1-2020/091474**
**WO-A1-2020/150943**
**WO-A1-2020/155179**
**WO-A1-2021/026230**
**WO-A1-2021/029748**
**WO-A1-2021/043008**
**WO-A1-2021/043060**
**WO-A1-2021/054726**
**WO-A1-2021/060766**
**CN-A- 110 535 614**
**CN-A- 110 536 399**
**CN-A- 110 536 452**
**US-A1- 2019 190 582**
**US-A1- 2020 028 638**

- **LG ELECTRONICS: "Feature lead summary#2 of Enhancements on Multi-beam Operations", vol. RAN WG1, no. Reno, USA; 20190513 - 20190517, 16 May 2019 (2019-05-16), XP051740041, Retrieved from the Internet <URL:http://www.3gpp.org/ftp/tsg%5Fran/WG1%5FRL1/TSGR1%5F97/Docs/R1%2D1907768%2Ezip> [retrieved on 20190516]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

• LG ELECTRONICS: "Feature lead summary#3 of Enhancements on Multi-beam Operations", vol. RAN WG1, no. Reno, USA; 20190513 - 20190517, 17 May 2019 (2019-05-17), XP051740132, Retrieved from the Internet <URL:http://www.3gpp.org/ftp/tsg%5Fran/WG1%5FRL1/TSGR1%5F97/Docs/R1%2D1907860%2Ezip> [retrieved on 20190517]

## Description

Related Applications

This application claims the benefit of provisional patent application serial number 62/976,098, filed February 13, 2020.

Technical Field

The technology of the disclosure relates generally to enhancing reliability of Physical Uplink Shared Channel (PUSCH) transmissions.

Background

New Radio (NR) Frame Structure and Resource Grid

NR uses CP-OFDM (Cyclic Prefix Orthogonal Frequency Division Multiplexing) in both Downlink (DL) (e.g., from a network node, a gNB, or a base station to a User Equipment (UE)) and Uplink (UL) (e.g., from a UE to a gNB). Discrete Fourier Transform (DFT) spread Orthogonal Frequency Division Multiplexing (OFDM) is also supported in the uplink. In the time domain, NR downlink and uplink are organized into equal-sized subframes each having a 1ms duration. A subframe is further divided into multiple slots of equal duration, which may depend on specific subcarrier spacing. For subcarrier spacing of $\Delta$f=15 kHz, there is only one slot per subframe, and each slot consists of 14 OFDM symbols.

Data is typically scheduled in NR based on slots. An example is shown in Figure 1 with a 14-symbol slot, where the first two symbols contain Physical Downlink Control Channel (PDCCH) and the rest contains physical shared data channel, either PDSCH (Physical Downlink Shared Channel) or PUSCH (Physical Uplink Shared Channel).

NR can be configured to support different subcarrier spacing values. The supported subcarrier spacing values (also referred to as different numerologies) are given by $\Delta f = (15 \times 2^{\mu})\ kHz$ where E {0,1,2,3,4}. $\Delta f = 15kHz$ is the basic subcarrier spacing. The slot durations at different subcarrier spacings is given by $\frac{1}{2^{\mu}}\ ms$ .

In the frequency domain, a system bandwidth is divided into Resource Blocks (RBs), each corresponding to 12 contiguous subcarriers. The RBs are numbered starting with 0 from one end of the system bandwidth. The basic NR physical time-frequency resource grid is illustrated in Figure 2, where only one RB within a 14-symbol slot is shown. One OFDM subcarrier during one OFDM symbol interval forms one Resource Element (RE).

In NR Rel-15, uplink data transmission can be dynamically scheduled using PDCCH. A UE first decodes uplink grants in PDCCH and then transmits data over PUSCH based on the decoded control information in the uplink grant such as modulation order, coding rate, uplink resource allocation, etc.

In dynamic scheduling of PUSCH, there is also a possibility to configure semi-persistent transmission of PUSCH using Configured Grants (CG). There are two types of CG based PUSCH defined in NR Rel-15. In CG type 1, a periodicity of PUSCH transmission and a time domain offset are configured by Radio Resource Control (RRC). In CG type 2, a periodicity of PUSCH transmission is configured by RRC and then the activation and release of the PUSCH transmission is controlled by Downlink Control Information (DCI), for example, with a PDCCH.

In NR, it is possible to schedule a PUSCH with time repetition, by the RRC parameter pusch-AggregationFactor (for dynamically scheduled PUSCH) and repK (for PUSCH with UL configured grant). In this case, the PUSCH is scheduled but transmitted in multiple adjacent slots (if the slots are available for UL) up until the number of repetitions as determined by the configured RRC parameter.

In the case of PUSCH with UL configured grant, the Redundancy Version (RV) sequence to be used is configured by the repK-RV field when repetitions are used. If repetitions are not used for PUSCH with UL configured grant, then the repK-RV field is absent.

In NR Release-15, there are two mapping types, Type A and Type B, applicable to PDSCH and PUSCH transmissions. Type A is usually referred to as slot-based while Type B transmissions may be referred to as non-slot-based or mini-slot-based.

Mini-slot transmissions can be dynamically scheduled and for NR Rel-15:

- Can be of length 7, 4, or 2 symbols for downlink, while it can be of any length for uplink
- Can start and end in any symbol within a slot.

Note that mini-slot transmissions in NR Rel-15 may not cross a slot-boundary.

One of the 2 frequency hopping modes, inter-slot and intra-slot frequency hopping, can be configured by higher layer for PUSCH transmission in NR Rel-15 in IE PUSCH-Config for dynamic transmission or IE configuredGrantConfig for type1 and type2 CGs.

Spatial Relation Definition

Spatial relation is used in NR to refer to a relationship between an UL Reference Signal (RS) to be transmitted such as PUCCH/PUSCH DMRS (Demodulation Reference Signal) and another previously transmitted or received RS, which can be either a DL RS (CSI-RS (Channel State Information RS) or SSB (Synchronization Signal Block)) or an UL RS (SRS (Sounding Reference Signal)). This is defined from a UE perspective.

If an UL transmitted RS is spatially related to a DL RS, it means that the UE should transmit the UL RS in the opposite (reciprocal) direction from which it received the DL RS previously. More precisely, the UE should apply the "same" Transmit (Tx) spatial filtering configuration for the transmission of the UL RS as the Rx spatial filtering configuration the UE used to receive the spatially related DL RS previously. Herein, the terminology 'spatial filtering configuration' may refer to the antenna weights that are applied at either the transmitter or the receiver for data/control transmission/reception. Another way to describe this is that the same "beam" should be used to transmit the signal from the UE as was used to receive the previous DL RS signal. The DL RS is also referred as the spatial filter reference signal.

On the other hand, if a first UL RS is spatially related to a second UL RS, then the UE should apply the same Tx spatial filtering configuration for the transmission for the first UL RS as the Tx spatial filtering configuration used to transmit the second UL RS previously. In other words, same beam is used to transmit the first and second UL RSs, respectively.

Since the UL RS is associated with a layer of PUSCH or PUCCH transmission, it is understood that the PUSCH/PUCCH is also transmitted with the same TX spatial filter as the associated UL RS.

PUSCH transmission schemes

In NR, there are two transmission schemes specified for PUSCH.

*1. Codebook based PUSCH*

The Codebook based UL transmission is used in both NR and LTE for non-calibrated UEs and/or UL FDD (Frequency Division Duplex). Codebook based PUSCH is enabled in NR if higher layer parameter txConfig = codebook. For dynamically scheduled PUSCH and configured grant PUSCH type 2, the Codebook based PUSCH transmission scheme can be summarized as follows:

- the UE transmits one or two SRS resources (e.g., one or two SRS resources configured in the SRS resource set associated with the higher layer parameter usage of value 'CodeBook'). Note that in NR Rel-15/16, the number of SRS resource sets with higher layer parameter usage set to 'CodeBook' is limited to one (e.g., only one SRS resource set is allowed to be configured for the purposes of Codebook based PUSCH transmission).
- the gNB determines a preferred Multiple-Input Multiple-Output (MIMO) transmit precoder for PUSCH (e.g., Transmit Precoding Matrix Indicator (TPMI)) from a codebook and the associated number of layers corresponding to the one or two SRS resources.
- the gNB indicates a selected SRS resource via a 1-bit 'SRS resource indicator' field if two SRS resources are configured in the SRS resource set. The 'SRS resource indicator' field is not indicated in DCI if only one SRS resource is configured in the SRS resource set.
- The gNB indicates a TPMI and the associated number of layers corresponding to the indicated SRS resource (in case 2 SRS resources are used) or the configured SRS resource (in case of 1 SRS resource is used). TPMI and the number of PUSCH layers is indicated by the 'Precoding information and number of layers' field in DCI formats 0_1 and 0_2. The number of bits in the 'Precoding information and number of layers' for Codebook based PUSCH is determined as follows:
  - ◦0 bits if 1 antenna port is used for PUSCH transmission.
  - ◦4, 5, or 6 bits according to Table 1 for 4 antenna ports, according to whether transform precoder is enabled or disabled, and the values of higher layer parameters maxRank, and codebookSubset. That is, 'Precoding information and number of layers' field size takes values of 6, 5, and 4 bits if codebookSubset is set to 'fullyAndPartialAndNonCoherent', 'PartialAndNonCoherent', and 'NonCoherent', respectively.

***Table 1: Precoding information and number of layers, for 4 antenna ports, if transform precoder** is **disabled and maxRank** = 2 **or 3 or 4 (Reproduced from Table 7.3.1.1.2-2 of 3GPP TS 38.212)***

| Bit field mapped to index | *codebookSu bset = fullyAndParti alAndNonCo herent* | Bit field mapped to index | *codebookSu bset = partialAndNo nCoherent* | Bit field mapped to index | *codebookSu bset= nonCoherent* |
|---|---|---|---|---|---|
| 0 | 1 layer: TPMI=0 | 0 | 1 layer: TPMI=0 | 0 | 1 layer: TPMI=0 |
| 1 | 1 layer: TPMI=1 | 1 | 1 layer: TPMI=1 | 1 | 1 layer: TPMI=1 |
| ... | ... | ... | ... | ... | ... |
| 3 | 1 layer: TPMI=3 | 3 | 1 layer: TPMI=3 | 3 | 1 layer: TPMI=3 |
| 4 | 2 layers: TPMI=0 | 4 | 2 layers: TPMI=0 | 4 | 2 layers: TPMI=0 |
| ... | ... | ... | ... | ... | ... |
| 9 | 2 layers: TPMI=5 | 9 | 2 layers: TPMI=5 | 9 | 2 layers: TPMI=5 |
| 10 | 3 layers: TPMI=0 | 10 | 3 layers: TPMI=0 | 10 | 3 layers: TPMI=0 |
| 11 | 4 layers: TPMI=0 | 11 | 4 layers: TPMI=0 | 11 | 4 layers: TPMI=0 |
| 12 | 1 layer: TPMI=4 | 12 | 1 layer: TPMI=4 | 12-15 | reserved |
| ... | ... | ... | ... | | |
| 19 | 1 layer: TPMI=11 | 19 | 1 layer: TPMI=11 | | |
| 20 | 2 layers: TPMI=6 | 20 | 2 layers: TPMI=6 | | |
| ... | ... | ... | ... | | |
| 27 | 2 layers: TPMI=13 | 27 | 2 layers: TPMI=13 | | |
| 28 | 3 layers: TPMI=1 | 28 | 3 layers: TPMI=1 | | |
| 29 | 3 layers: TPMI=2 | 29 | 3 layers: TPMI=2 | | |
| 30 | 4 layers: TPMI=1 | 30 | 4 layers: TPMI=1 | | |
| 31 | 4 layers: TPMI=2 | 31 | 4 layers: TPMI=2 | | |
| 32 | 1 layers: TPMI=12 | | | | |
| ... | ... | | | | |
| 47 | 1 layers: TPMI=27 | | | | |
| 48 | 2 layers: TPMI=14 | | | | |
| ... | ... | | | | |
| 55 | 2 layers: TPMI=21 | | | | |
| 56 | 3 layers: TPMI=3 | | | | |
| ... | ... | | | | |
| 59 | 3 layers: TPMI=6 | | | | |
| 60 | 4 layers: TPMI=3 | | | | |
| 61 | 4 layers: TPMI=4 | | | | |
| 62-63 | reserved | | | | |

◦ 2, 4, or 5 bits according to Table 2 for 4 antenna ports, according to whether transform precoder is enabled or disabled, and the values of higher layer parameters maxRank, and codebookSubset. That is, 'Precoding information and number of layers ' field size takes values of 5, 4, and 2 bits if codebookSubset is set to 'fullyAndPartialAndNonCoherent', 'PartialAndNonCoherent', and 'NonCoherent', respectively.

***Table 2: Precoding information and number of layers for 4 antenna ports, if transform precoder** is **enabled, or if transform precoder** is **disabled and maxRank = 1 (Reproduced from Table 7.3.1.1.2-3 of 3GPP TS 38.212)***

| Bit field mapped to index | *codebookSu bset = fullyAndParti alAndNonCo herent* | Bit field mapped to index | *codebookSu bset= partialAndNo nCoherent* | Bit field mapped to index | *codebookSu bset= nonCoherent* |
|---|---|---|---|---|---|
| 0 | 1 layer: TPMI=0 | 0 | 1 layer: TPMI=0 | 0 | 1 layer: TPMI=0 |
| 1 | 1 layer: TPMI=1 | 1 | 1 layer: TPMI=1 | 1 | 1 layer: TPMI=1 |
| ... | ... | ... | ... | ... | ... |
| 3 | 1 layer: TPMI=3 | 3 | 1 layer: TPMI=3 | 3 | 1 layer: TPMI=3 |
| 4 | 1 layer: TPMI=4 | 4 | 1 layer: TPMI=4 | | |
| ... | ... | ... | ... | | |
| 11 | 1 layer: TPMI=11 | 11 | 1 layer: TPMI=11 | | |
| 12 | 1 layers: TPMI=12 | 12-15 | reserved | | |
| ... | ... | | | | |
| 27 | 1 layers: TPMI=27 | | | | |
| 28-31 | reserved | | | | |

◦ 2 or 4 bits according to Table 3 for 2 antenna ports, according to whether transform precoder is enabled or disabled, and the values of higher layer parameters maxRank and codebookSubset. That is, 'Precoding information and number of layers' field size takes on values of 4 and 2 bits if codebookSubset is set to 'fullyAndPartialAndNonCoherent' and 'NonCoherent', respectively.

***Table 3: Precoding information and number of layers, for 2 antenna ports, if transform precoder** is **disabled and maxRank = 2 (Reproduced from Table 7.3.1.1.2-4 of 3GPP TS 38.212)***

| Bit field mapped to index | *codebookSubset = fullyAndPartialAndN onCoherent* | Bit field mapped to index | *codebookSubset = nonCoherent* |
|---|---|---|---|
| 0 | 1 layer: TPMI=0 | 0 | 1 layer: TPMI=0 |
| 1 | 1 layer: TPMI=1 | 1 | 1 layer: TPMI=1 |
| 2 | 2 layers: TPMI=0 | 2 | 2 layers: TPMI=0 |
| 3 | 1 layer: TPMI=2 | 3 | reserved |
| 4 | 1 layer: TPMI=3 | | |
| 5 | 1 layer: TPMI=4 | | |
| 6 | 1 layer: TPMI=5 | | |
| 7 | 2 layers: TPMI=1 | | |
| 8 | 2 layers: TPMI=2 | | |
| 9-15 | reserved | | |

◦ 1 or 3 bits according to Table 4 for 2 antenna ports, if txConfig = codebook, and according to whether transform precoder is enabled or disabled, and the values of higher layer parameters maxRank and codebookSubset. That is, 'Precoding information and number of layers ' field size takes on values of 3 and 1 bits if codebookSubset is set to 'fullyAndPartialAndNonCoherent' and 'NonCoherent', respectively.

***Table 4: Precoding information and number of layers, for 2 antenna ports, if transform precoder** is **enabled, or if transform precoder is disabled and maxRank = 1 (Reproduced from Table 7.3.1.1.2-5 of 3GPP TS 38.212)***

| Bit field mapped to index | *codebookSubset = fullyAndPartialAndN onCoherent* | Bit field mapped to index | *codebookSubset = nonCoherent* |
|---|---|---|---|
| 0 | 1 layer: TPMI=0 | 0 | 1 layer: TPMI=0 |
| 1 | 1 layer: TPMI=1 | 1 | 1 layer: TPMI=1 |
| 2 | 1 layer: TPMI=2 | | |
| 3 | 1 layer: TPMI=3 | | |
| 4 | 1 layer: TPMI=4 | | |
| 5 | 1 layer: TPMI=5 | | |
| 6-7 | reserved | | |

• the UE performs PUSCH transmission using the TPMI and number of layers indicated. If one SRS resource is configured in the SRS resource set associated with the higher layer parameter usage of value 'CodeBook', then the PUSCH DMRS is spatially related to the most recent SRS transmission in this SRS resource. If two SRS resources are configured in the SRS resource set associated with the higher layer parameter usage of value 'CodeBook', then the PUSCH DMRS is spatially related to the most recent SRS transmission in the SRS resource indicated by the 'SRS resource indicator' field.

The TPMI is used to indicate the precoder to be applied over the layers {0... *v*-1} and that corresponds to the SRS resource selected by the SRI when multiple SRS resources are configured, or if a single SRS resource is configured TPMI is used to indicate the precoder to be applied over the layers {0... *v*-1} and that corresponds to the SRS resource. The transmission precoder is selected from the uplink codebook that has a number of antenna ports equal to higher layer parameter *nrofSRS-Ports* in *SRS-Config.*

*2. Non-Codebook based PUSCH*

Non-Codebook based UL transmission is available in NR, enabling reciprocity-based UL transmission. By assigning a DL CSI-RS to the UE, the UE can measure and deduce suitable precoder weights for PUSCH transmission of up to four spatial layers. The candidate precoder weights are transmitted using up to four single-port SRS resources corresponding to the spatial layers. Subsequently, the gNB indicates the transmission rank and multiple SRS resource indicators, jointly encoded using $\left\lceil log_2\left(\sum_{k=1}^{min\{L_{\max},N_{\text{SRS}}\}}\binom{N_{\text{SRS}}}{k}\right)\right\rceil$ bits, where N_"SRS" indicates the number of configured SRS resources, and L_max is the maximum number of supported layers for PUSCH. Non-Codebook based PUSCH in NR is enabled if higher layer parameter txConfig = noncodebook. Table 5 shows the mapping of codepoints of the SRI field to SRI(s) for different number of N_"SRS" when $L_{max}$ = 4.

Note that in NR Rel-15/16, the number of SRS resource sets with higher layer parameter usage set to 'nonCodeBook' is limited to one (e.g., only one SRS resource set is allowed to be configured for the purposes of non-Codebook based PUSCH transmission). The maximum number of SRS resource sets that can be configured for non-codebook based uplink transmission is 4.

In NR, for non-codebook based PUSCH, the UE performs a one-to-one mapping from the indicated SRI(s) to the indicated DM-RS port(s) and their corresponding PUSCH layers {0 ... v-1} in increasing order. The UE shall transmit PUSCH using the same antenna ports as the SRS port(s) in the SRS resource(s) indicated by SRI(s), where the SRS port in (*i*+1)-th SRS resource in the SRS resource set is indexed as $p_i$ = 1000 +*i* .

NR Release 16 PUSCH Enhancements

In NR Release 16, PUSCH repetition enhancements were made for both PUSCH type A and type B for the purposes of further latency reduction (e.g., for Rel-16 Ultra-Reliable Low-Latency Communication (URLLC)).

*1. PUSCH repetition Type A (slot based) enhancements*

In NR Rel-15, the number of aggregated slots for both dynamic grant and configured grant Type 2 are RRC configured. In NR Rel-16, this was enhanced so that the number of repetitions can be dynamically indicated (e.g., change from one PUSCH scheduling occasion to next PUSCH scheduling occasion). That is, in addition to the starting symbol S, and the length of the PUSCH L, a number of nominal repetitions K are signaled as part of Time-Domain Resource Allocation (TDRA). Furthermore, the maximum number of aggregated slots was increased to K=16 to account for DL heavy Time Division Duplex (TDD) patterns. Inter-slot and intra-slot hopping can be applied for Type A repetition. The number of repetitions K is nominal since some slots may be DL slots and are then skipped for PUSCH transmissions. So, K is the maximal number of repetitions possible.

*2. PUSCH repetition Type B (mini-slot based) enhancements*

PUSCH repetition Type B applies both to dynamic and configured grants. Type B PUSCH repetition can cross the slot boundary in Rel-16. When scheduling a transmission with PUSCH repetition Type B, in addition to the starting symbol S, and the length of the PUSCH L, a number of nominal repetitions K are signaled as part of TDRA in NR Rel-16. Inter-slot frequency hopping and inter-repetition frequency hopping can be configured for Type B repetition. To determine the actual time domain allocation of Type B PUSCH repetitions, a two-step process is used:

1) Allocate K nominal repetitions of length L back-to-back (adjacent in time), ignoring slot boundaries and TDD pattern.
2) If a nominal repetition that crosses a slot boundary or occupies symbols not usable for UL transmission (e.g., UL/DL switching points due to TDD pattern), the offending nominal repetition may be split into two or more shorter actual repetitions. If the number of potentially valid symbols for PUSCH repetition type B transmission is greater than zero for a nominal repetition, the nominal repetition consists of one or more actual repetitions, where each actual repetition consists of a consecutive set of potentially valid symbols that can be used for PUSCH repetition Type B transmission within a slot.

Although the term 'PUSCH repetition' is used in the disclosure, it can be interchangeably used with other terms such as 'PUSCH transmission occasion'.
In NR Rel-15/16, when PUSCH is repeated according to PUSCH repetition Type A or Type B, the PUSCH is limited to a single transmission layer.

*3. Redundancy Version*

The channel encoder can be controlled by the RV. In NR, an information payload can be encoded with four different RVs, to allow for incremental redundancy decoding. The redundancy version to be applied on the nth transmission occasion of the TB, where n = 0, 1, ... K -1, is determined according to table below.

***Table 5: Redundancy version for PUSCH transmission***

| **$rv_{id}$ indicated by the DCI scheduling the PUSCH** | **$rv_{id}$ to be applied to $n^{th}$ transmission occasion (repetition Type A) or $n^{th}$ actual repetition (repetition Type B)** | | | |
|---|---|---|---|---|
| | **$n$ mod 4 = 0** | **$n$ mod 4 = 1** | **$n$ mod 4 = 2** | **$n$ mod 4 = 3** |
| 0 | 0 | 2 | 3 | 1 |
| 2 | 2 | 3 | 1 | 0 |
| 3 | 3 | 1 | 0 | 2 |
| 1 | 1 | 0 | 2 | 3 |

CN 110 535 614 A describes a technique for signaling information transmission. A method comprises receiving signaling information, and determining channel state information of M physical uplink channels based on the signaling information, wherein M is a positive integer greater than 1.
CN 110 536 399 A describes a power control method comprising determining Y pieces of spatial parameter information associated with uplink transmission, and determining the sending power of X times of repeated transmission of uplink transmission according to the power control parameters associated with the Y pieces of space parameter information, wherein X and Y are integers greater than or equal to 1.
EP 3 567 967 A1 describes a technique for beam indication for uplink transmission in a wireless communication system from the perspective of a UE. The method includes: the UE is configured with a first serving cell, and is indicated to activate the first serving cell and an active UL BWP, wherein the first serving cell or the active UL BWP is not configured with PUCCH resources. The UE does not expect to be indicated to transmit a first PUSCH in the first serving cell or the active UL BWP in RRC connected mode, wherein the first PUSCH is scheduled by a DCI format without spatial relation field.

Summary

Embodiments disclosed herein include methods for enhancing Physical Uplink Shared Channel (PUSCH) reliability.

Aspects of the present invention are provided in the independent claims and further detailed in the dependent claims.

The scope of the present invention is defined by the scope of the appended claims.

Brief Description of the Drawings

The accompanying drawing figures incorporated in and forming a part of this specification illustrate several aspects of the disclosure, and together with the description serve to explain the principles of the disclosure.

Figure 1 is a schematic diagram of a 14-symbol slot, wherein a first two of the 14-symbols includes Physical Downlink Control Channel (PDCCH) and the rest of the 14-symbols include Physical Shared Data Channel, such as Physical Downlink Shared Channel (PDSCH) or Physical Uplink Shared Channel (PUSCH);

Figure 2 is a schematic diagram of an exemplary Resource Block (RB) that includes the 14-symbol slot of Figure 1;

Figure 3 is a schematic diagram providing an exemplary illustration of existing New-Radio (NR) rel-15/16 codebook based PUSCH configured for single Transmission/Reception Point (TRP) based reception;

Figure 4 illustrates one example of a cellular communications system in which embodiments of the present disclosure may be implemented;

Figure 5 is a flowchart of an exemplary method performed by the wireless device for enhancing PUSCH reliability;

Figure 6 is a flowchart of an exemplary method performed by the base station for enhancing PUSCH reliability;

Figure 7 is a flowchart of a method performed by a wireless device for enhancing PUSCH reliability according to two Sounding Reference Signal (SRS) resource sets and based on codebook based PUSCH transmission or non-codebook based PUSCH transmission;

Figure 8 is a flowchart of a method performed by a base station for enhancing PUSCH reliability based on codebook according to two SRS resource sets and based PUSCH transmission or non-codebook based PUSCH transmission;

Figure 9 is a schematic diagram of an example that two Sounding Reference Signal (SRS) resources are configured in an SRS resource set;

Figure 10 is a schematic diagram of an example, wherein a most significant bit $S_{L-1}$ of the 'SRS resource indicator' field is used to dynamically switch between a first mode and a second mode;

Figure 11 is a schematic diagram of an example, wherein the SRS resources in the SRS resource set of Figure 9 are grouped into two different SRS resource groups;

Figure 12 is a schematic block diagram of a radio access node according to some embodiments of the present disclosure;

Figure 13 is a schematic block diagram that illustrates a virtualized embodiment of the radio access node according to some embodiments of the present disclosure;

Figure 14 is a schematic block diagram of the radio access node according to some other embodiments of the present disclosure;

Figure 15 is a schematic block diagram of a wireless communication device according to some embodiments of the present disclosure;

Figure 16 is a schematic block diagram of the wireless communication device according to some other embodiments of the present disclosure;

Figure 17 is a schematic diagram of a communication system configured according to an embodiment of the present disclosure;

Figure 18 is a schematic diagram of an exemplary communication system;

Figure 19 is a flowchart illustrating a method implemented in a communication system, in accordance with one embodiment of the present disclosure;

Figure 20 is a flowchart illustrating a method implemented in a communication system, in accordance with one embodiment of the present disclosure;

Figure 21 is a flowchart illustrating a method implemented in a communication system, in accordance with one embodiment of the present disclosure; and

Figure 22 is a flowchart illustrating a method implemented in a communication system, in accordance with one embodiment of the present disclosure.

Detailed Description

The embodiments set forth below represent information to enable those skilled in the art to practice the embodiments and illustrate the best mode of practicing the embodiments. Upon reading the following description in light of the accompanying drawing figures, those skilled in the art will understand the concepts of the disclosure and will recognize applications of these concepts not particularly addressed herein.

The scope of the present invention is defined by the scope of the appended claims.

**Radio Node:** As used herein, a "radio node" is either a radio access node or a wireless communication device.

**Radio Access Node:** As used herein, a "radio access node" or "radio network node" or "radio access network node" is any node in a Radio Access Network (RAN) of a cellular communications network that operates to wirelessly transmit and/or receive signals. Some examples of a radio access node include, but are not limited to, a base station (e.g., a New Radio (NR) base station (gNB) in a Third Generation Partnership Project (3GPP) Fifth Generation (5G) NR network or an enhanced or evolved Node B (eNB) in a 3GPP Long Term Evolution (LTE) network), a high-power or macro base station, a low-power base station (e.g., a micro base station, a pico base station, a home eNB, or the like), a relay node, a network node that implements part of the functionality of a base station (e.g., a network node that implements a gNB Central Unit (gNB-CU) or a network node that implements a gNB Distributed Unit (gNB-DU)) or a network node that implements part of the functionality of some other type of radio access node.

**Core Network Node:** As used herein, a "core network node" is any type of node in a core network or any node that implements a core network function. Some examples of a core network node include, e.g., a Mobility Management Entity (MME), a Packet Data Network Gateway (P-GW), a Service Capability Exposure Function (SCEF), a Home Subscriber Server (HSS), or the like. Some other examples of a core network node include a node implementing a Access and Mobility Function (AMF), a UPF, a Session Management Function (SMF), an Authentication Server Function (AUSF), a Network Slice Selection Function (NSSF), a Network Exposure Function (NEF), a Network Function (NF) Repository Function (NRF), a Policy Control Function (PCF), a Unified Data Management (UDM), or the like.

**Communication Device:** As used herein, a "communication device" is any type of device that has access to an access network. Some examples of a communication device include, but are not limited to: mobile phone, smart phone, sensor device, meter, vehicle, household appliance, medical appliance, media player, camera, or any type of consumer electronic, for instance, but not limited to, a television, radio, lighting arrangement, tablet computer, laptop, or Personal Computer (PC). The communication device may be a portable, hand-held, computer-comprised, or vehicle-mounted mobile device, enabled to communicate voice and/or data via a wireless or wireline connection.

**Wireless Communication Device:** One type of communication device is a wireless communication device, which may be any type of wireless device that has access to (i.e., is served by) a wireless network (e.g., a cellular network). Some examples of a wireless communication device include, but are not limited to: a User Equipment device (UE) in a 3GPP network, a Machine Type Communication (MTC) device, and an Internet of Things (IoT) device. Such wireless communication devices may be, or may be integrated into, a mobile phone, smart phone, sensor device, meter, vehicle, household appliance, medical appliance, media player, camera, or any type of consumer electronic, for instance, but not limited to, a television, radio, lighting arrangement, tablet computer, laptop, or PC. The wireless communication device may be a portable, hand-held, computer-comprised, or vehicle-mounted mobile device, enabled to communicate voice and/or data via a wireless connection.

**Network Node:** As used herein, a "network node" is any node that is either part of the radio access network or the core network of a cellular communications network/system. In some embodiments, a TRP may be either a network node, a radio head, a spatial relation, or a Transmission Configuration Indicator (TCI) state. A TRP may be represented by a spatial relation, a SRS resource set or a TCI state in some embodiments. In some embodiments, a TRP may a part of the gNB transmitting and receiving radio signals to/from UE according to physical layer properties and parameters inherent to that element.

Note that the description given herein focuses on a 3GPP cellular communications system and, as such, 3GPP terminology or terminology similar to 3GPP terminology is oftentimes used. However, the concepts disclosed herein are not limited to a 3GPP system.

Note that, in the description herein, reference may be made to the term "cell"; however, particularly with respect to 5G NR concepts, beams may be used instead of cells and, as such, it is important to note that the concepts described herein are equally applicable to both cells and beams.

There currently exist certain challenge(s). For dynamically scheduled Physical Uplink Shared Channel (PUSCH) and configured grant PUSCH type 2, existing NR rel-15/16 codebook based PUSCH only allows a single Sounding Reference Signal (SRS) resource to define the spatial relation for PUSCH Demodulation Reference Signal (DMRS). As a result, it may not be efficient to use multiple Transmission/Reception Points (TRPs) for reception, especially in a Frequency Range (FR) above 6 GHz (FR2), wherein the UL Transmit (TX) beams can be narrow in beam-width.

As shown in the example of Figure 3, existing NR rel-15/16 codebook based PUSCH is suitable for single TRP based reception, where the PUSCH transmission is targeted towards a single TRP. That is, the PUSCH DMRS is spatially related to the latest SRS transmission in the SRS resource indicated by a single SRI. When a number of PUSCH repetitions are either configured (e.g., via pusch-AggregationFactor for dynamically scheduled PUSCH or via repK for PUSCH with UL configured grant) or dynamically indicated (e.g., as part of TDRA), the same spatial relation for PUSCH DMRS is assumed for all the PUSCH repetitions. Since the same spatial relation only targets a single TRP, it unsuitable for multi-TRP reception, whereby a better reliability may be achieved as a result of spatial diversity.

Certain aspects of the present disclosure and their embodiments may provide solutions to the aforementioned or other challenges. Embodiments disclosed herein are related to PUSCH transmission with a plurality of repetitions, wherein multiple sets of spatial relations are assumed for PUSCH DMRS in different subsets of the plurality of repetitions. For PUSCH transmission with multiple repetitions, signaling/indication methods are disclosed to allow more than one spatial relation to be used in different subset of the plurality of PUSCH repetitions. For codebook based PUSCH transmission, signaling/configuration aspects related to how to indicate multiple SRS Resource Indicators (SRIs) and how to indicate multiple Transmit Precoding Matrix Indicators (TPMIs) are disclosed. For non-codebook based PUSCH transmission, signaling/configuration aspects related to how to indicate multiple SRIs with different spatial relations being used in different subset of repetitions with single or multiple PUSCH layer(s) per repetition for PUSCH are disclosed.

There are, proposed herein, various embodiments which may address one or more of the issues disclosed herein. Embodiments disclosed herein include methods for enhancing PUSCH reliability by transmitting from a wireless device (e.g., a UE) a number of PUSCH repetitions to multiple TRPs in a network node (e.g., a base station) and receiving by the network node via the multiple TRPs the number of PUSCH repetitions.

In one aspect, a method performed by the wireless device for enhancing PUSCH reliability is provided. The method includes receiving an instruction(s) (e.g., via RRC) from the network node for transmitting a plurality of PUSCH repetitions to multiple TRPs. The method also includes transmitting the plurality of PUSCH repetitions to the multiple TRPs in accordance to the instruction(s) received from the network node.

In another aspect, a method performed by the base station for enhancing PUSCH reliability is provided. The method includes providing an instruction(s) (e.g., via RRC) to the wireless device for transmitting a plurality of PUSCH repetitions to multiple TRPs in the base station via codebook based PUSCH transmission or non-codebook based PUSCH transmission. The method also includes receiving the plurality of PUSCH repetitions via the multiple TRPs based on the instruction(s) provided to the wireless device.

Certain embodiments may provide one or more of the following technical advantage(s).

- Providing signaling support whereby more than one spatial relation for PUSCH DMRS may be assumed for different PUSCH repetitions.
- Enabling switching between multi-TRP based PUSCH reception and single-TRP based PUSCH reception based on traffic being served to a UE.
- Enabling dynamic switching between multi-TRP based PUSCH reception and single-TRP based PUSCH reception.

Figure 4 illustrates one example of a cellular communications system 400 in which embodiments of the present disclosure may be implemented. In the embodiments described herein, the cellular communications system 400 is a 5G system (5GS) including a NR RAN. In this example, the RAN includes base stations 402-1 and 402-2, which in 5G NR are referred to as gNBs (e.g., LTE RAN nodes connected to 5GC, which are referred to as gn-eNBs), controlling corresponding (macro) cells 404-1 and 404-2. The base stations 402-1 and 402-2 are generally referred to herein collectively as base stations 402 and individually as base station 402. Likewise, the (macro) cells 404-1 and 404-2 are generally referred to herein collectively as (macro) cells 404 and individually as (macro) cell 404. The RAN may also include a number of low power nodes 406-1 through 406-4 controlling corresponding small cells 408-1 through 408-4. The low power nodes 406-1 through 406-4 can be small base stations (such as pico or femto base stations) or Remote Radio Heads (RRHs), or the like. Notably, while not illustrated, one or more of the small cells 408-1 through 408-4 may alternatively be provided by the base stations 402. The low power nodes 406-1 through 406-4 are generally referred to herein collectively as low power nodes 406 and individually as low power node 406. Likewise, the small cells 408-1 through 408-4 are generally referred to herein collectively as small cells 408 and individually as small cell 408. The cellular communications system 400 also includes a core network 410, which in the 5GS is referred to as the 5G core (5GC). The base stations 402 (and optionally the low power nodes 406) are connected to the core network 410.

The base stations 402 and the low power nodes 406 provide service to wireless communication devices 412-1 through 412-5 in the corresponding cells 404 and 408. The wireless communication devices 412-1 through 412-5 are generally referred to herein collectively as wireless communication devices 412 and individually as wireless communication device 412. In the following description, the wireless communication devices 412 are oftentimes UEs, but the present disclosure is not limited thereto.

As previously mentioned, for dynamically scheduled PUSCH and configured grant PUSCH type 2, existing NR rel-15/16 codebook based PUSCH only allows a single SRS resource to define the spatial relation for PUSCH DMRS. As a result, it may not be efficient to use multiple TRPs for reception, especially in a frequency range (FR) above 6 GHz (FR2), wherein the UL TX beams can be narrow in beam-width. In this regard, to enhance PUSCH reliability, methods for enhancing PUSCH reliability are disclosed herein.

In one aspect, Figure 5 is a flowchart of an exemplary method performed by the wireless device for enhancing PUSCH reliability. The method includes one or more of the following: receiving (500) an instruction(s) (e.g., via RRC) from the network node for transmitting a plurality of PUSCH repetitions to multiple TRPs, and transmitting (502) the plurality of PUSCH repetitions to the multiple TRPs in accordance to the instruction(s) received from the network node.

In another aspect, Figure 6 is a flowchart of an exemplary method performed by the base station for enhancing PUSCH reliability. The method includes one or more of the following: providing (600) an instruction(s) (e.g., via RRC) to the wireless device for transmitting a plurality of PUSCH repetitions to multiple TRPs in the base station via codebook based PUSCH transmission or non-codebook based PUSCH transmission, and receiving (602) the plurality of PUSCH repetitions via the multiple TRPs based on the instruction(s) provided to the wireless device.

Specific embodiments of the present disclosure can enhance PUSCH reliability in accordance with codebook based PUSCH transmission or non-codebook based PUSCH transmission. In this regard, Figure 7 is a flowchart of a method according to the present invention, performed by a wireless device for enhancing PUSCH reliability according to two SRS resource sets and based on codebook based PUSCH transmission or non-codebook based PUSCH transmission. Note that the various aspects of the process of Figure 7 are illustrated in Figures 9 through 11, which are described below.

According to Figure 7, the wireless device receives a configuration of two SRS resource sets that includes a first SRS resource set and a second SRS resource set (step 700). The wireless device also receives an instruction for transmitting a plurality of PUSCH repetitions according to the two SRS resource sets (step 702). In a non-limiting example, the wireless device is configured to receive the instruction to transmit the PUSCH repetitions based on codebook based PUSCH transmission (step 702-1) or non-codebook based PUSCH transmission (step 702-2). The wireless device may also receive multiple spatial relations each associated with one of multiple SRS resources in a respective one of the two SRS resource sets (step 702-3).

Accordingly, the wireless device transmits the PUSCH repetitions to the multiple network nodes based on the received instruction (step 704). In one aspect, the wireless device is configured to transmit a first group of the PUSCH repetitions according to the first SRS resource set and a second group of the PUSCH repetitions according to the second SRS resource set (step 704-1). Alternatively, the wireless device is configured to transmit the PUSCH repetitions according the first SRS resource and the second SRS resource set (step 704-2). Specifically, the wireless device may transmit each of the PUSCH transmissions based on a single spatial layer (step 704-2a) or multiple spatial layers (step 704-2b). The wireless device may transmit the PUSCH repetitions based on a first spatial relation associated with one of the SRS resources in the first SRS resource set and a second spatial relation associated with one of the SRS resources in the second SRS resource set (step 704-3). In a non-limiting example, the wireless device can transmit the first group of the PUSCH repetitions on even numbered PUSCH repetitions and the second group of the PUSCH repetitions on odd numbered PUSCH repetitions (step 704-4). Alternatively, the wireless device may transmit the first group of PUSCH repetitions on a first number of consecutive PUSCH repetitions and the second group of PUSCH repetitions on a second number of consecutive PUSCH repetitions subsequent to the first number of consecutive PUSCH repetitions (step 704-5).

The wireless device may also apply an RV sequence to each of the PUSCH repetitions (step 706). The wireless device may also receive the instruction for transmitting the PUSCH repetitions according to one of the two SRS resource sets (step 708) and transmit the PUSCH repetitions according to the one of the two SRS resource sets (step 710). In this regard, the wireless device may switch between transmitting the PUSCH repetitions according to the two SRS resource sets and according to the one of the two SRS resource sets (step 712).

Figure 8 is a flowchart of a method according to the present invention, performed by a base station for enhancing PUSCH reliability according to two SRS resource sets and based on codebook based PUSCH transmission or non-codebook based PUSCH transmission. Note that the various aspects of the process of Figure 8 are illustrated in Figures 9 through 11, which are described below.

According to Figure 8, the base station transmits, to a wireless device, a configuration of two SRS resource sets that includes a first SRS resource set and a second SRS resource set (step 800). The base station provides an instruction to the wireless device for transmitting a plurality of PUSCH repetitions according to the two SRS resource sets (step 802). In a non-limiting example, the base station is configured to provide the instruction to transmit the PUSCH repetitions based on codebook based PUSCH transmission (step 802-1) or non-codebook based PUSCH transmission (step 802-2). The base station may also provide multiple spatial relations each associated with one of multiple SRS resources in a respective one of the two SRS resource sets (step 802-3).

Accordingly, the base station receives the PUSCH repetitions based on the instruction provided to the wireless device (step 804). In one aspect, the base station is configured to receive a first group of the PUSCH repetitions according to the first SRS resource set and a second group of the PUSCH repetitions according to the second SRS resource set (step 804-1). Alternatively, the base station is configured to receive the PUSCH repetitions according to the first SRS resource and the second SRS resource set (step 804-2). Specifically, the base station may receive each of the PUSCH transmissions based on a single spatial layer (step 804-2a) or multiple spatial layers (step 804-2b). The base station may receive the PUSCH repetitions based on a first spatial relation associated with one of the SRS resources in the first SRS resource set and a second spatial relation associated with one of the SRS resources in the second SRS resource set (step 804-3). In a non-limiting example, the base station can receive the first group of PUSCH repetitions on even numbered PUSCH repetitions and the second group of PUSCH repetitions on odd numbered PUSCH repetitions (step 804-4). Alternatively, the base station may receive the first group of PUSCH repetitions on a first number of consecutive PUSCH repetitions and the second group of PUSCH repetitions on a second number of consecutive PUSCH repetitions subsequent to the first number of consecutive PUSCH repetitions (step 804-5).

The base station may also apply an RV sequence to each of the PUSCH repetitions (step 806). The base station may also provide the instruction for transmitting the PUSCH repetitions according to one of the two SRS resource sets (step 808) and receive the PUSCH repetitions according to the one of the two SRS resource sets (step 810). In this regard, the base station may dynamically switch between receiving the PUSCH repetitions according to the two SRS resource sets and according to the one of the two SRS resource sets (step 812).

Specific embodiments for enhancing PUSCH reliability between the wireless device and the network node are now described in detail below.

Embodiment 1 (e.g., 702, 702-1, 704-1, 802, 802-1, 804-1): Dynamically Indicating Multiple SRIs for Codebook based PUSCH

In one embodiment, a higher layer configuration (e.g., via Radio Resource Control (RRC)) from a network node (e.g., base station) to a UE can be used to configure the following mode of operations:

- a first mode following Rel-15/16 UE behavior (also referred to as "standard behavior" hereinafter), wherein the same spatial relation for PUSCH DMRS is assumed for all the PUSCH repetitions
- a second mode (also referred to as "enhanced behavior" hereinafter),

wherein more than one spatial relations for PUSCH DMRS is assumed for different PUSCH repetitions.

The second mode enables PUSCH transmission towards multiple TRPs. Figure 9 shows an example (e.g., 708, 710, 808, 810) where two SRS resources are configured in an SRS resource set . Since there are two TRPs in this example, the network will determine the preferred TPMI corresponding to each SRS resource. The network then indicates the two TPMIs (TPMI1 and TPMI2) corresponding to the two SRS resources. In this case the UE can have two different spatial relations for PUSCH DMRS to be used across different repetitions:

(1) PUSCH DMRS spatially related to latest SRS transmission in SRS resource 1
(2) PUSCH DMRS spatially related to latest SRS transmission in SRS resource 2

These two spatial relations for PUSCH DMRS can be used to direct PUSCH transmission towards TRPs 1 and 2 in different PUSCH repetition instances. As shown in the example of Figure 9, the first spatial relation can be used in even numbered PUSCH repetitions while the second spatial relation can be used in odd numbered PUSCH repetitions (e.g., 704-4, 804-4). Alternatively (e.g., 704-5, 804-5), the first spatial relation can be applied to the first two repetitions and the second spatial relations can be applied to the next two repetitions and this sequence may be repeated until the last repetition is reached. Note that the PUSCH repetitions as illustrated in Figure 9 can be either nominal PUSCH repetitions or actual PUSCH repetitions.

It should be noted that when the number of SRS resources configured per SRS resource set is equal to the number of different spatial relations for PUSCH DMRS to be alternated across different PUSCH repetitions, SRI does not need to be indicated in Downlink Control Information (DCI). For instance, in the example of Figure 9, there are two different spatial relations for PUSCH DMRS, which are alternated across different PUSCH repetitions and there are two SRS resources configured per SRS resource set. Hence, in some embodiments, when this condition is met, then SRI does not need to be indicated to the UE and 'SRS resource indicator' field can be absent from DCI.

In the more general case, the number of SRS resources configured per SRS resource set can be $N_{SRS}$ and the number of different spatial relations for PUSCH DMRS to be alternated across different PUSCH repetitions can be *Q,* where $N_{SRS} > Q$. In this case, Q SRS resources need to be selected out of the $N_{SRS}$ SRS resources, and there are $\binom{N_{SRS}}{Q}$ such combinations possible. Hence, in one embodiment, the field size of *'SRS resource indicator'* field is given by $\left\lceil log_2\left(\binom{N_{SRS}}{Q}\right)\right\rceil$ for Codebook based PUSCH. Table 7 shows an example with $N_{SRS} = 4$ *and* $Q = 2$, where the *'SRS*

*resource indicator'* field consists of 3 bits and each codepoint in the bit field indicates two SRIs which are used to provide two different spatial relations for PUSCH DMRS to be alternated across different PUSCH repetitions.

***Table 6: An example indication of SRI combinations for codebook based PUSCH transmission with*** $N_{SRS}$ = 4 ***and Q*** = 2

| Bit field mapped to index | *SRI Combinations* |
|---|---|
| 0 | SRI=0, SRI=1 |
| 1 | SRI=0, SRI=2 |
| 2 | SRI=0, SRI=3 |
| 3 | SRI=1, SRI=2 |
| 4 | SRI=1, SRI=3 |
| 5 | SRI=2, SRI=3 |
| 6-7 | reserved |

A different number of SRIs are indicated by different codepoints in the SRI field, which is used to determine the number of different spatial relations for PUSCH DMRS to be alternated across different PUSCH repetitions. For instance, if a codepoint in the SRI field indicates a single SRS resource, then a single spatial relation associated with the single SRS resource is used for PUSCH DMRS across all the PUSCH repetitions. On the other hand, if a codepoint in the SRI field indicates multiple SRS resources, then multiple spatial relations associated with the multiple SRS resources are used for PUSCH DMRS across different PUSCH repetitions.

In some scenarios, the UE may be served with different types of traffic (e.g., URLLC traffic vs eMBB traffic). In these scenarios, it may be beneficial to dynamically switch between multi-TRP based PUSCH reception and single-TRP based PUSCH reception. That is, switching between the following modes may be supported dynamically via information in DCI:

- a first mode following Rel-15/16 UE behavior (standard behavior), wherein the same spatial relation for PUSCH DMRS is assumed for all the PUSCH repetitions
- a second mode (enhanced behavior), wherein more than one spatial relation for PUSCH DMRS is assumed for different PUSCH repetitions.

In one embodiment, a single bit in the 'SRS resource indicator' field in DCI is used to dynamically switch between the first mode (e.g., single-TRP mode) and the second mode (e.g., multi-TRP mode). Figure 10 shows an example, wherein the most significant bit $S_{L-1}$ of the 'SRS resource indicator' field is used to dynamically switch between the first mode and the second mode. In the example, the first mode and the second mode are indicated to the UE when the most significant bit is set to values of $S_{L-1}$ = 0 and $S_{L-1}$ =1, respectively. If the first mode is indicated to the UE, the remaining bits $S_{L-2}, S_{L-3}, ..., S_1, S_0$ are used to indicate a single SRI to be used to determine spatial relation for PUSCH DMRS. If the second mode is indicated to the UE, the remaining bits $S_{L-2}, S_{L-3}, ..., S_1, S_0$ are used to indicate a combination of multiple SRIs to be used to determine spatial relations for PUSCH DMRS.

In an alternative embodiment, an indication of whether the first mode (e.g., single-TRP based PUSCH repetition) or second mode (e.g., multi-TRP based PUSCH repetition) should be used by the UE can be indicated as part of a row in the TDRA table. This is advantageous as whether to use single-TRP or multi-TRP based repetitions can be indicated along with the number of nominal repetitions K in a particular row of the TDRA table. For instance, two rows in the TDRA table can be configured with K=8 with one row being configured for single-TRP based PUSCH repetition while the other row being configured for multi-TRP based PUSCH repetition. Thus, by dynamically indicating these two different rows in the TDRA table via the TDRA field in DCI, one can switch between single-TRP based PUSCH repetition and multi-TRP based PUSCH repetition.

In another alternative embodiment, a number X of different spatial relations for PUSCH DMRS to be used across different PUSCH repetitions is higher layer configured to the UE (e.g., via RRC signaling). The DCI then contains X different 'SRS resource indicator' fields with each such field corresponding to PUSCH transmission towards a different TRP. The X different 'SRS resource indicator' fields can be used to independently indicate X different SRS resources to be used by the UE to derive the spatial relations for PUSCH DMRS corresponding to X different TRPs.

In an alternative embodiment, a single SRI field in DCI is split into X different subfield with each subfield indicating an SRI for each TRP. In some embodiments, the number of subfields in the SRI field can be dependent on a higher layer parameter or another field in DCI. For example, depending on a higher layer parameter configuration (e.g., RRC configuration), the single SRI field in DCI may consist of a single subfield (e.g., X=1) or multiple subfields (e.g., X>1).

In yet another embodiment, two spatial relations may be configured for an SRS resource. Each of the two spatial relations is associated with one TRP. When the SRS resource is selected by the SRI field in a DCI scheduling a PUSCH, and PUSCH repetition is also indicated, PUSCH repetition would be performed over the two TRPs associated with the two spatial relations. The SRI may also point to two sets of PUSCH power control parameters, one for each of the two spatial relations.

In another embodiment (e.g., 706, 806), the Redundancy Version (RV) sequence defined in Rel-15/16 (shown in Table 5) may be applied in a per TRP (e.g., per SRS resource or per SRS spatial relation) basis. A RV offset between two TRPs may be configured by RRC.

In yet another embodiment, multiple SRS resource sets may be configured by RRC for a UE for Codebook based PUSCH transmission. Each SRS resource set may contain one or more SRS resource each with one SRS port. One or more SRS resource sets may be dynamically indicated in DCI together with one or more SRS resources in the SRS resource set to a UE. For example, if two SRS resource sets are configured, either the first SRS resource set, the second SRS resource set, or both the first and the second SRS resource sets may be indicated to the UE. When both SRS resource sets are indicated, the UE would transmit the PUSCH according to the first SRS resource set (e.g., according to the spatial relation associated with the first SRS resource set) in the first PUSCH transmission occasion and according to the second SRS resource set (e.g., according to the spatial relation associated with the second SRS resource set) in the second PUSCH transmission occasion.

Embodiment 2 (e.g., 702-1, 802-1): Dynamically Indicating Multiple TPMIs for Codebook based PUSCH

As shown in Figure 9, for multi-TRP based PUSCH repetition, multiple TPMIs need to be indicated. It is assumed that the number of SRS ports in different SRS resources is the same.

In one embodiment, the multiple TPMIs that need to be indicated to the UE are jointly encoded using the same 'Precoding information and number of layers' field. An example is shown in Table 8 below where two TPMIs are jointly indicated. In one variant of the embodiment, the same number of spatial layers is associated with each TPMI (e.g., both TPMI1 and TPMI2 have a single spatial layer). In an alternative embodiment, different number of spatial layers can be associated with each TPMI (e.g., TPMI1 has 2 spatial layers while TPMI2 has a single spatial layer).

***Table 7: An example of joint indication of multiple TPMIs in 'Precoding information and number of layers' field***

| Bit field mapped to index | *Combinations of TPMIs and number of layers indicated* |
|---|---|
| 0 | 1 layer: $TPMI_1$=0, $TPMI_2$=0 |
| 1 | 1 layer: $TPMI_1$=1, $TPMI_2$=2 |
| 2 | 2 layers: $TPMI_1$=0, $TPMI_2$= 1 |
| 3 | 1 layer: $TPMI_1$=2, $TPMI_2$= 4 |
| 4 | 1 layer: $TPMI_1$=3, $TPMI_2$= 5 |
| 5 | 1 layer: $TPMI_1$=4, $TPMI_2$=4 |
| 6 | 1 layer: $TPMI_1$=5, $TPMI_2$=5 |
| 7 | 2 layers: $TPMI_1$=1, $TPMI_2$=2 |
| 8 | 2 layers: $TPMI_1$=2, $TPMI_2$=0 |
| 9-15 | reserved |

In an alternate embodiment, additional 'Precoding information and number of layers' fields are added to the DCI to independently indicate the TPMIs corresponding to different TRPs. If a number X of different spatial relations for PUSCH DMRS to be used across different PUSCH repetitions is higher layer configured to the UE (e.g., via RRC signaling), then DCI then contains X different 'Precoding information and number of layers' fields with each such field corresponding to PUSCH transmission towards a different TRP. In some variants of this embodiment, the number of layers indicated by each of these fields needs to be identical while the TPMIs indicated can be different.

In another embodiment, at least one Phase Tracking Reference Signal (PTRS) port is associated with a DMRS layer(s) corresponding to each of the multiple TPMIs indicated to the UE. For example, if two TPMIs are indicated to the UE, the UE will transmit two PTRS ports. Specifically, the UE may transmit a first of the two PTRS port corresponds to the DMRS layer corresponding to the first TPMI and a second of the two PTRS port corresponds to the DMRS layer corresponding to the second TPMI.

Embodiment 3 (e.g., 702, 702-2, 704-2, 802, 802-2, 804-2): Dynamically Indicating Multiple SRIs for non-codebook based PUSCH

In case of non-codebook based transmission, an L-layer transmission with repetition over Q TRPs needs to have Q subsets of L out of $N_{SRS}$ SRS resources. In one embodiment, when multi-TRP transmission is indicated, the SRS resource indicator is extended from $\left\lceil log_2\left(\sum_{k=1}^{min\{L_{\max},N_{SRS}\}}\binom{N_{SRS}}{k}\right)\right\rceil$ bits in the single-TRP case (i.e., from what is currently supported in NR) to Q times $\left\lceil log_2\left(\sum_{k=1}^{min\{L_{\max},N_{SRS}\}}\binom{N_{SRS}}{k}\right)\right\rceil$ bits in the multi-TRP case. However, this may lead to ambiguity since the number of layers is jointly encoded with the SRS resource subset for each TRP. Since a repetition should have the same number of spatial layers, a better option is to jointly encode the number of spatial layers with multiple SRS resource sets. In another embodiment, this is done by joint encoding using $\left\lceil log_2\left(\sum_{k=1}^{min\{L_{\max},N_{SRS}\}}\frac{1}{Q!}\binom{N_{SRS}}{k}^Q\right)\right\rceil$ bits. This assumes a pre-defined rule of transmission of the different sets (e.g., a lexicographic order). Alternatively, if desired to also signal an explicit order of transmission to the different TRPs, the joint encoding can take the order into account using $\left\lceil log_2\left(\sum_{k=1}^{min\{L_{\max},N_{SRS}\}}\binom{N_{SRS}}{k}^Q\right)\right\rceil$ bits.

In some embodiments (e.g., 702-2a, 704-2a, 802-2a, 804-2a), the maximum number of spatial layers per PUSCH repetition is limited to 1 spatial layer. Assume that the number of different spatial relations for PUSCH DMRS to be alternated across different PUSCH repetitions is denoted by Q. Then, all PUSCH repetitions using the Q alternating spatial relations is limited to a single PUSCH layer. In this embodiment, the UE maps the indicated SRI(s) the same DM-RS port and its corresponding PUSCH layer 0 in all the repetitions. That is, the SRS port in the multiple SRS resources in the SRS resource set indicated via the SRI field is in indexed as p_i=1000 irrespective of i. This embodiment applies to non-codebook based PUSCH transmissions with repetition.

In another embodiment (e.g., 702-2b, 704-2b, 802-2b, 804-2b), the maximum number of layers per PUSCH repetition is limited to L layers, wherein the value of L may represent a UE capability (e.g., whether a UE supports two PUSCH layers (e.g., L=2) per repetition is reported as part of UE capability). In this embodiment, the SRS resources in an SRS resource set are grouped into two different SRS resource groups. An example is shown in Figure 11. The SRS resources 1 and 2 in SRS resource group 1, which are indicated via the SRI field and corresponding spatial relations, are used for transmitting up to L=2 layers in the 1st PUSCH transmission occasion. Similarly, the SRS resources 3 and 4 in SRS group 2, which are indicated via the SRI field and corresponding spatial relations, are used for transmitting up to L=2 layers in the 2nd PUSCH transmission occasion. In some embodiments, the number of SRS resources in each SRS resource group indicated via SRI field should be identical in order to support the same number of layers transmitted in each repetition. For example, if an SRI indicates 4 SRS resources, then there must be 2 SRS resources belonging to each SRS resource group. Similarly, if SRI indicates 2 SRS resources, then there must be 1 SRS resource belonging to each SRS resource group. If SRI indicates only a single SRS resource, it may correspond to a single layer PUSCH transmission using the spatial relation of indicated SRS resource in all the repetitions. In some embodiments, the SRS group is configured to a SRS resource by including an SRS group ID per SRS resource configuration.

Although the example in Figure 11 shows the 1st group of SRS resources and 2nd group of SRS resources being used for PUSCH transmission in 1st and 2nd transmission occasions respectively, other patterns may also be possible. For instance, the 1st group of SRS resources may be used for PUSCH transmission in the 1st and 2nd transmission occasions, while the 2nd group of SRS resources may be used for PUSCH transmission in the 3rd and 4th transmission occasions. The same pattern may be repeated if more than 4 transmission occasions are configured or indicated for PUSCH. In the example embodiment in Figure 11, even though two SRS resource groups are presented, the idea can be equally presented with two SRS resource sets in place of two SRS resource groups (e.g., 704-4, 804-4).

In another embodiment, one PTRS port is associated with each SRS resource group. For example, if the UE selects a first set of layers of PUSCH on SRS resources in a first SRS group for transmitting a first PUSCH, but transmits a second PUSCH or a second set of layers of a PUSCH on SRS resources in a second SRS group, the UE will transmit two PTRS ports, one per SRS resource group. If the UE selects layers from a single SRS group, the UE transmits only a single PTRS port.

In some further embodiments, for codebook based PUSCH transmission, a single SRS resource set with two SRS resources, each associated with a TRP, may be configured for a UE. For non-codebook based PUSCH transmission, two SRS resource sets (e.g., 700, 800), each associated with a TRP, may be configured for a UE. To support dynamic switching between PUSCH transmission over a single TRP and two TRPs, a bit filed in DCI may be used for the purpose. In case of codebook based PUSCH transmission, two SRS resources may be indicated for PUSCH transmission to two TRPs. For non-codebook based transmission, two SRS resource sets may be indicated for PUSCH transmission to two TRPs (e.g., 700, 800).

Figure 12 is a schematic block diagram of a radio access node 1200 according to some embodiments of the present disclosure. Optional features are represented by dashed boxes. The radio access node 1200 may be, for example, a base station 402 or 406 or a network node that implements all or part of the functionality of the base station 402 or gNB described herein. As illustrated, the radio access node 1200 includes a control system 1202 that includes one or more processors 1204 (e.g., Central Processing Units (CPUs), Application Specific Integrated Circuits (ASICs), Field Programmable Gate Arrays (FPGAs), and/or the like), memory 1206, and a network interface 1208. The one or more processors 1204 are also referred to herein as processing circuitry. In addition, the radio access node 1200 may include one or more radio units 1210 that each includes one or more transmitters 1212 and one or more receivers 1214 coupled to one or more antennas 1216. The radio units 1210 may be referred to or be part of radio interface circuitry. In some embodiments, the radio unit(s) 1210 is external to the control system 1202 and connected to the control system 1202 via, e.g., a wired connection (e.g., an optical cable). However, in some other embodiments, the radio unit(s) 1210 and potentially the antenna(s) 1216 are integrated together with the control system 1202. The one or more processors 1204 operate to provide one or more functions of a radio access node 1200 as described herein (e.g., one or more functions of a network node as described above, for example, with reference to Figure 9). In some embodiments, the function(s) are implemented in software that is stored, e.g., in the memory 1206 and executed by the one or more processors 1204.

Figure 13 is a schematic block diagram that illustrates a virtualized embodiment of the radio access node 1200 according to some embodiments of the present disclosure. This discussion is equally applicable to other types of network nodes. Further, other types of network nodes may have similar virtualized architectures. Again, optional features are represented by dashed boxes.

As used herein, a "virtualized" radio access node is an implementation of the radio access node 1200 in which at least a portion of the functionality of the radio access node 1200 is implemented as a virtual component(s) (e.g., via a virtual machine(s) executing on a physical processing node(s) in a network(s)). As illustrated, in this example, the radio access node 1200 may include the control system 1202 and/or the one or more radio units 1210, as described above. The control system 1202 may be connected to the radio unit(s) 1210 via, for example, an optical cable or the like. The radio access node 1200 includes one or more processing nodes 1300 coupled to or included as part of a network(s) 1302. If present, the control system 1202 or the radio unit(s) are connected to the processing node(s) 1300 via the network 1302. Each processing node 1300 includes one or more processors 1304 (e.g., CPUs, ASICs, FPGAs, and/or the like), memory 1306, and a network interface 1308.

In this example, functions 1310 of the radio access node 1200 described herein (e.g., one or more functions of a network node as described above, for example, with reference to Figure 9) are implemented at the one or more processing nodes 1300 or distributed across the one or more processing nodes 1300 and the control system 1202 and/or the radio unit(s) 1210 in any desired manner. In some particular embodiments, some or all of the functions 1312 of the radio access node 1200 described herein are implemented as virtual components executed by one or more virtual machines implemented in a virtual environment(s) hosted by the processing node(s) 1300. As will be appreciated by one of ordinary skill in the art, additional signaling or communication between the processing node(s) 1300 and the control system 1202 is used in order to carry out at least some of the desired functions 1310. Notably, in some embodiments, the control system 1202 may not be included, in which case the radio unit(s) 1210 communicate directly with the processing node(s) 1300 via an appropriate network interface(s).

In some embodiments, a computer program including instructions which, when executed by at least one processor, causes the at least one processor to carry out the functionality of radio access node 1000 or a node (e.g., a processing node 1300) implementing one or more of the functions 1312 of the radio access node 1200 in a virtual environment according to any of the embodiments described herein is provided (e.g., one or more functions of a network node as described above, for example, with reference to Figure 9). In some embodiments, a carrier comprising the aforementioned computer program product is provided. The carrier is one of an electronic signal, an optical signal, a radio signal, or a computer readable storage medium (e.g., a non-transitory computer readable medium such as memory).

Figure 14 is a schematic block diagram of the radio access node 1200 according to some other embodiments of the present disclosure. The radio access node 1200 includes one or more modules 1400, each of which is implemented in software. The module(s) 1400 provide the functionality of the radio access node 1200 described herein (e.g., one or more functions of a network node as described above, for example, with reference to Figure 9). This discussion is equally applicable to the processing node 1300 of Figure 13 where the modules 1400 may be implemented at one of the processing nodes 1300 or distributed across multiple processing nodes 1300 and/or distributed across the processing node(s) 1300 and the control system 1202.

Figure 15 is a schematic block diagram of a wireless communication device 1500 according to some embodiments of the present disclosure. As illustrated, the wireless communication device 1500 includes one or more processors 1502 (e.g., CPUs, ASICs, FPGAs, and/or the like), memory 1504, and one or more transceivers 1506 each including one or more transmitters 1508 and one or more receivers 1510 coupled to one or more antennas 1512. The transceiver(s) 1506 includes radio-front end circuitry connected to the antenna(s) 1512 that is configured to condition signals communicated between the antenna(s) 1512 and the processor(s) 1502, as will be appreciated by on of ordinary skill in the art. The processors 1502 are also referred to herein as processing circuitry. The transceivers 1506 are also referred to herein as radio circuitry. In some embodiments, the functionality of the wireless communication device 1500 described above (e.g., one or more functions of a network node as described above, for example, with reference to Figure 9) may be fully or partially implemented in software that is, e.g., stored in the memory 1504 and executed by the processor(s) 1502. Note that the wireless communication device 1500 may include additional components not illustrated in Figure 15 such as, e.g., one or more user interface components (e.g., an input/output interface including a display, buttons, a touch screen, a microphone, a speaker(s), and/or the like and/or any other components for allowing input of information into the wireless communication device 1500 and/or allowing output of information from the wireless communication device 1500), a power supply (e.g., a battery and associated power circuitry), etc.

In some embodiments, a computer program including instructions which, when executed by at least one processor, causes the at least one processor to carry out the functionality of the wireless communication device 1500 according to any of the embodiments described herein (e.g., one or more functions of a network node as described above, for example, with reference to Figure 9) is provided. In some embodiments, a carrier comprising the aforementioned computer program product is provided. The carrier is one of an electronic signal, an optical signal, a radio signal, or a computer readable storage medium (e.g., a non-transitory computer readable medium such as memory).

Figure 16 is a schematic block diagram of the wireless communication device 1500 according to some other embodiments of the present disclosure. The wireless communication device 1500 includes one or more modules 1600, each of which is implemented in software. The module(s) 1600 provide the functionality of the wireless communication device 1500 described herein (e.g., one or more functions of a network node as described above, for example, with reference to Figure 9).

With reference to Figure 17, in accordance with an embodiment, a communication system includes a telecommunication network 1700, such as a 3GPP-type cellular network, which comprises an access network 1702, such as a RAN, and a core network 1704. The access network 1702 comprises a plurality of base stations 1706A, 1706B, 1706C, such as Node Bs, eNBs, gNBs, or other types of wireless Access Points (APs), each defining a corresponding coverage area 1708A, 1708B, 1708C. Each base station 1706A, 1706B, 1706C is connectable to the core network 1704 over a wired or wireless connection 1710. A first UE 1712 located in coverage area 1708C is configured to wirelessly connect to, or be paged by, the corresponding base station 1706C. A second UE 1714 in coverage area 1708A is wirelessly connectable to the corresponding base station 1706A. While a plurality of UEs 1712, 1714 are illustrated in this example, the disclosed embodiments are equally applicable to a situation where a sole UE is in the coverage area or where a sole UE is connecting to the corresponding base station 1706.

The telecommunication network 1700 is itself connected to a host computer 1716, which may be embodied in the hardware and/or software of a standalone server, a cloud-implemented server, a distributed server, or as processing resources in a server farm. The host computer 1716 may be under the ownership or control of a service provider, or may be operated by the service provider or on behalf of the service provider. Connections 1718 and 1720 between the telecommunication network 1700 and the host computer 1716 may extend directly from the core network 1704 to the host computer 1716 or may go via an optional intermediate network 1722. The intermediate network 1722 may be one of, or a combination of more than one of, a public, private, or hosted network; the intermediate network 1722, if any, may be a backbone network or the Internet; in particular, the intermediate network 1722 may comprise two or more sub-networks (not shown).

The communication system of Figure 17 as a whole enables connectivity between the connected UEs 1712, 1714 and the host computer 1716. The connectivity may be described as an Over-the-Top (OTT) connection 1724. The host computer 1716 and the connected UEs 1712, 1714 are configured to communicate data and/or signaling via the OTT connection 1724, using the access network 1702, the core network 1704, any intermediate network 1722, and possible further infrastructure (not shown) as intermediaries. The OTT connection 1724 may be transparent in the sense that the participating communication devices through which the OTT connection 1724 passes are unaware of routing of uplink and downlink communications. For example, the base station 1706 may not or need not be informed about the past routing of an incoming downlink communication with data originating from the host computer 1716 to be forwarded (e.g., handed over) to a connected UE 1712. Similarly, the base station 1706 need not be aware of the future routing of an outgoing uplink communication originating from the UE 1712 towards the host computer 1716.

Example implementations, in accordance with an embodiment, of the UE, base station, and host computer discussed in the preceding paragraphs will now be described with reference to Figure 18. In a communication system 1800, a host computer 1802 comprises hardware 1804 including a communication interface 1806 configured to set up and maintain a wired or wireless connection with an interface of a different communication device of the communication system 1800. The host computer 1802 further comprises processing circuitry 1808, which may have storage and/or processing capabilities. In particular, the processing circuitry 1808 may comprise one or more programmable processors, ASICs, FPGAs, or combinations of these (not shown) adapted to execute instructions. The host computer 1802 further comprises software 1810, which is stored in or accessible by the host computer 1802 and executable by the processing circuitry 1808. The software 1810 includes a host application 1812. The host application 1812 may be operable to provide a service to a remote user, such as a UE 1814 connecting via an OTT connection 1816 terminating at the UE 1814 and the host computer 1802. In providing the service to the remote user, the host application 1812 may provide user data which is transmitted using the OTT connection 1816.

The communication system 1800 further includes a base station 1818 provided in a telecommunication system and comprising hardware 1820 enabling it to communicate with the host computer 1802 and with the UE 1814. The hardware 1820 may include a communication interface 1822 for setting up and maintaining a wired or wireless connection with an interface of a different communication device of the communication system 1800, as well as a radio interface 1824 for setting up and maintaining at least a wireless connection 1826 with the UE 1814 located in a coverage area (not shown in Figure 18) served by the base station 1818. The communication interface 1822 may be configured to facilitate a connection 1828 to the host computer 1802. The connection 1828 may be direct or it may pass through a core network (not shown in Figure 18) of the telecommunication system and/or through one or more intermediate networks outside the telecommunication system. In the embodiment shown, the hardware 1820 of the base station 1818 further includes processing circuitry 1830, which may comprise one or more programmable processors, ASICs, FPGAs, or combinations of these (not shown) adapted to execute instructions. The base station 1818 further has software 1832 stored internally or accessible via an external connection.

The communication system 1800 further includes the UE 1814 already referred to. The UE's 1814 hardware 1834 may include a radio interface 1836 configured to set up and maintain a wireless connection 1826 with a base station serving a coverage area in which the UE 1814 is currently located. The hardware 1834 of the UE 1814 further includes processing circuitry 1838, which may comprise one or more programmable processors, ASICs, FPGAs, or combinations of these (not shown) adapted to execute instructions. The UE 1814 further comprises software 1840, which is stored in or accessible by the UE 1814 and executable by the processing circuitry 1838. The software 1840 includes a client application 1842. The client application 1842 may be operable to provide a service to a human or non-human user via the UE 1814, with the support of the host computer 1802. In the host computer 1802, the executing host application 1812 may communicate with the executing client application 1842 via the OTT connection 1816 terminating at the UE 1814 and the host computer 1802. In providing the service to the user, the client application 1842 may receive request data from the host application 1812 and provide user data in response to the request data. The OTT connection 1816 may transfer both the request data and the user data. The client application 1842 may interact with the user to generate the user data that it provides.

It is noted that the host computer 1802, the base station 1818, and the UE 1814 illustrated in Figure 18 may be similar or identical to the host computer 1716, one of the base stations 1706A, 1706B, 1706C, and one of the UEs 1712, 1714 of Figure 17, respectively. This is to say, the inner workings of these entities may be as shown in Figure 18 and independently, the surrounding network topology may be that of Figure 17.

In Figure 18, the OTT connection 1816 has been drawn abstractly to illustrate the communication between the host computer 1802 and the UE 1814 via the base station 1818 without explicit reference to any intermediary devices and the precise routing of messages via these devices. The network infrastructure may determine the routing, which may be configured to hide from the UE 1814 or from the service provider operating the host computer 1802, or both. While the OTT connection 1816 is active, the network infrastructure may further take decisions by which it dynamically changes the routing (e.g., on the basis of load balancing consideration or reconfiguration of the network).

The wireless connection 1826 between the UE 1814 and the base station 1818 is in accordance with the teachings of the embodiments described throughout this disclosure. One or more of the various embodiments improve the performance of OTT services provided to the UE 1814 using the OTT connection 1816, in which the wireless connection 1826 forms the last segment. More precisely, the teachings of these embodiments may improve the PUSCH reliability and flexible switching between the 'standard mode' and the 'enhanced mode' and thereby provide benefits such as enabling multi-TRP codebook based transmission and multi-TRP non-codebook based transmission.

A measurement procedure may be provided for the purpose of monitoring data rate, latency, and other factors on which the one or more embodiments improve. There may further be an optional network functionality for reconfiguring the OTT connection 1816 between the host computer 1802 and the UE 1814, in response to variations in the measurement results. The measurement procedure and/or the network functionality for reconfiguring the OTT connection 1816 may be implemented in the software 1810 and the hardware 1804 of the host computer 1802 or in the software 1840 and the hardware 1834 of the UE 1814, or both. In some embodiments, sensors (not shown) may be deployed in or in association with communication devices through which the OTT connection 1816 passes; the sensors may participate in the measurement procedure by supplying values of the monitored quantities exemplified above, or supplying values of other physical quantities from which the software 1810, 1840 may compute or estimate the monitored quantities. The reconfiguring of the OTT connection 1816 may include message format, retransmission settings, preferred routing, etc.; the reconfiguring need not affect the base station 1818, and it may be unknown or imperceptible to the base station 1818.

Such procedures and functionalities may be known and practiced in the art. In certain embodiments, measurements may involve proprietary UE signaling facilitating the host computer 1802's measurements of throughput, propagation times, latency, and the like. The measurements may be implemented in that the software 1810 and 1840 causes messages to be transmitted, in particular empty or 'dummy' messages, using the OTT connection 1816 while it monitors propagation times, errors, etc.

Figure 19 is a flowchart illustrating a method implemented in a communication system, in accordance with one embodiment. The communication system includes a host computer, a base station, and a UE which may be those described with reference to Figures 17 and 18. For simplicity of the present disclosure, only drawing references to Figure 19 will be included in this section. In step 1900, the host computer provides user data. In sub-step 1902 (which may be optional) of step 1900, the host computer provides the user data by executing a host application. In step 1904, the host computer initiates a transmission carrying the user data to the UE. In step 1906 (which may be optional), the base station transmits to the UE the user data which was carried in the transmission that the host computer initiated, in accordance with the teachings of the embodiments described throughout this disclosure. In step 1908 (which may also be optional), the UE executes a client application associated with the host application executed by the host computer.

Figure 20 is a flowchart illustrating a method implemented in a communication system, in accordance with one embodiment. The communication system includes a host computer, a base station, and a UE which may be those described with reference to Figures 17 and 18. For simplicity of the present disclosure, only drawing references to Figure 20 will be included in this section. In step 2000 of the method, the host computer provides user data. In an optional sub-step (not shown) the host computer provides the user data by executing a host application. In step 2002, the host computer initiates a transmission carrying the user data to the UE. The transmission may pass via the base station, in accordance with the teachings of the embodiments described throughout this disclosure. In step 2004 (which may be optional), the UE receives the user data carried in the transmission.

Figure 21 is a flowchart illustrating a method implemented in a communication system, in accordance with one embodiment. The communication system includes a host computer, a base station, and a UE which may be those described with reference to Figures 17 and 18. For simplicity of the present disclosure, only drawing references to Figure 21 will be included in this section. In step 2100 (which may be optional), the UE receives input data provided by the host computer. Additionally or alternatively, in step 2102, the UE provides user data. In sub-step 2104 (which may be optional) of step 2100, the UE provides the user data by executing a client application. In sub-step 2106 (which may be optional) of step 2102, the UE executes a client application which provides the user data in reaction to the received input data provided by the host computer. In providing the user data, the executed client application may further consider user input received from the user. Regardless of the specific manner in which the user data was provided, the UE initiates, in sub-step 2108 (which may be optional), transmission of the user data to the host computer. In step 2110 of the method, the host computer receives the user data transmitted from the UE, in accordance with the teachings of the embodiments described throughout this disclosure.

Figure 22 is a flowchart illustrating a method implemented in a communication system, in accordance with one embodiment. The communication system includes a host computer, a base station, and a UE which may be those described with reference to Figures 17 and 18. For simplicity of the present disclosure, only drawing references to Figure 22 will be included in this section. In step 2200 (which may be optional), in accordance with the teachings of the embodiments described throughout this disclosure, the base station receives user data from the UE. In step 2202 (which may be optional), the base station initiates transmission of the received user data to the host computer. In step 2204 (which may be optional), the host computer receives the user data carried in the transmission initiated by the base station.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include Digital Signal Processor (DSPs), special-purpose digital logic, and the like. The processing circuitry may be configured to execute program code stored in memory, which may include one or several types of memory such as Read Only Memory (ROM), Random Access Memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

While processes in the figures may show a particular order of operations performed by certain embodiments of the present disclosure, it should be understood that such order is exemplary (e.g., alternative embodiments may perform the operations in a different order, combine certain operations, overlap certain operations, etc.). The scope of the present invention is defined by the scope of the appended claims.

At least some of the following abbreviations may be used in this disclosure. If there is an inconsistency between abbreviations, preference should be given to how it is used above. If listed multiple times below, the first listing should be preferred over any subsequent listing(s).

- 3GPP Third Generation Partnership Project
- 5G Fifth Generation
- 5GC Fifth Generation Core
- 5GS Fifth Generation System
- AF Application Function
- AMF Access and Mobility Function
- AN Access Network
- AP Access Point
- ASIC Application Specific Integrated Circuit
- AUSF Authentication Server Function
- CG Configured Grants
- CP-OFDM Cyclic Prefix Orthogonal Frequency Division Multiplexing
- CPU Central Processing Unit
- CSI-RS Channel State Information Reference Signal
- DCI Downlink Control Information
- DFT Discrete Fourier Transform
- DL Down Link
- DMRS Demodulation Reference Signal
- DN Data Network
- DSP Digital Signal Processor
- eNB Enhanced or Evolved Node B
- EPS Evolved Packet System
- E-UTRA Evolved Universal Terrestrial Radio Access
- FDD Frequency Division Duplex
- FPGA Field Programmable Gate Array
- gNB New Radio Base Station
- gNB-DU New Radio Base Station Distributed Unit
- HSS Home Subscriber Server
- IoT Internet of Things
- IP Internet Protocol
- LTE Long Term Evolution
- MIMO Multiple-Input Multiple-Output
- MME Mobility Management Entity
- MTC Machine Type Communication
- NEF Network Exposure Function
- NF Network Function
- NR New Radio
- NRF Network Function Repository Function
- NSSF Network Slice Selection Function
- OFDM Orthogonal Frequency Division Multiplexing
- OTT Over-the-Top
- PC Personal Computer
- PCF Policy Control Function
- PDCCH Physical Downlink Control Channel
- PDSCH Physical Downlink Shared Channel
- P-GW Packet Data Network Gateway
- PTRS Phase Tracking Reference Signal
- PUSCH Physical Uplink Shared Channel
- QoS Quality of Service
- RAM Random Access Memory

(continued)

- RAN Radio Access Network
- RB Resource Blocks
- RE Resource Element
- ROM Read Only Memory
- RRC Radio Resource Control
- RRH Remote Radio Head
- RS Reference Signal
- RTT Round Trip Time
- SCEF Service Capability Exposure Function
- SMF Session Management Function
- SRI SRS Resource Indicators
- SRS Sounding Reference Signal
- SSB Synchronization Signal Block
- TDD Time Division Duplex
- TDRA Time-Domain Resource Allocation
- TPMI Transmit Precoding Matrix Indicator
- TRP Transmission/Reception Points
- UDM Unified Data Management
- UE User Equipment
- UL Uplink
- UPF User Plane Function

Those skilled in the art will recognize improvements and modifications to the embodiments of the present disclosure. The scope of the present invention is defined by the scope of the appended claims.

## Claims

**1.** A method performed by a wireless device for enhancing Physical Uplink Shared Channel, PUSCH, reliability, comprising:

receiving (700) a configuration of two Sounding Reference Signal, SRS, resource sets, comprising a first SRS resource set and a second SRS resource set;
receiving (702) an instruction from a network node for transmitting a plurality of PUSCH repetitions according to the two SRS resource sets; and
transmitting (704) the plurality of PUSCH repetitions according to the first SRS resource set and the second SRS resource set based on the received instruction,

the method being **characterized in that**:

the plurality of PUSCH repetitions comprises a first group of PUSCH repetitions and a second group of PUSCH repetitions, the second group being complementary to the first group, and the first group of PUSCH repetitions is transmitted according to the first SRS resource set and the second group of PUSCH repetitions is transmitted according to the second SRS resource set,
wherein the two SRS resource sets are configured for codebook based PUSCH transmission, wherein:

- receiving (702) the instruction further comprises receiving (702-1) the instruction for transmitting the plurality of PUSCH repetitions via codebook based PUSCH transmission, and
- transmitting (704) the plurality of PUSCH repetitions comprises transmitting (704-1) the first group of PUSCH repetitions among the plurality of PUSCH repetitions according to the first SRS resource set and the second group of PUSCH repetitions among the plurality of PUSCH repetitions according to the second SRS resource set based on the codebook based PUSCH transmission,

wherein the instruction for transmitting the plurality of PUSCH repetitions via the codebook based PUSCH transmission comprises:

- a first SRS Resource Indicator, SRI, indicating a first SRS resource from the first SRS resource set, and a second SRI indicating a second SRS resource from the second SRS resource set, and
- a first Transmit Precoding Matrix Indicator, TPMI, associated with the first SRS resource, and a second TPMI associated with the second SRS resource, and

wherein the multiple SRIs are provided in different SRI fields of Downlink Control Information, DCI.

**2.** The method of claim 1, wherein:

- the two TPMIs are independently indicated in two 'Precoding Information and Number of Layers' fields in Downlink Control Information, DCI; and/or
- the two TPMIs are each associated with an identical number of spatial layers, wherein, optionally, at least one Phase Tracking Reference Signal, PTRS, port is associated with the spatial layers in each of the two TPMIs.

**3.** A method performed by a wireless device for enhancing Physical Uplink Shared Channel, PUSCH, reliability, comprising:

receiving (700) a configuration of two Sounding Reference Signal, SRS, resource sets, comprising a first SRS resource set and a second SRS resource set;
receiving (702) an instruction from a network node for transmitting a plurality of PUSCH repetitions according to the two SRS resource sets; and
transmitting (704) the plurality of PUSCH repetitions according to the first SRS resource set and the second SRS resource set based on the received instruction,

the method being **characterized in that**:

the plurality of PUSCH repetitions comprises a first group of PUSCH repetitions and a second group of PUSCH repetitions, the second group being complementary to the first group, and the first group of PUSCH repetitions is transmitted according to the first SRS resource set and the second group of PUSCH repetitions is transmitted according to the second SRS resource set,
wherein the two SRS resource sets are configured for non-codebook based PUSCH transmission, wherein:

- receiving (702) the instruction comprises receiving (702-2) the instruction for transmitting the plurality of PUSCH repetitions via non-codebook based PUSCH transmission, and
- transmitting (704) the plurality of PUSCH transmissions comprises transmitting (704-2) the plurality of PUSCH repetitions according to the first SRS resource set and the second SRS resource set based on the non-codebook based PUSCH transmission,

wherein the instruction for transmitting the plurality of PUSCH repetitions via the non-codebook based PUSCH transmission comprises a first SRS Resource Indicator, SRI, indicating one or more SRS resources from the first SRS resource set, and a second SRI indicating one or more SRS resources from the second SRS resource set, and
wherein the multiple SRIs are provided in different SRI fields of Downlink Control Information, DCI.

**4.** The method of claim 3, wherein the instruction for transmitting the plurality of PUSCH repetitions via the non-codebook based transmission further comprises a plurality of spatial layers jointly encoded with each of the first SRI and the second SRI, wherein, optionally:

- transmitting (704-2) the plurality of PUSCH repetitions based on the non-codebook based PUSCH transmission comprises transmitting (704-2a) each of plurality of PUSCH repetitions via the non-codebook based PUSCH transmission based on a single spatial layer among the plurality of spatial layers; or
- transmitting (704-2) the plurality of PUSCH repetitions based on the non-codebook based PUSCH transmission comprises transmitting (704-2b) each of the plurality of PUSCH repetitions via the non-codebook based PUSCH transmission based on multiple spatial layers among the plurality of spatial layers.

**5.** The method of claim 1 or 3, wherein:

- each of the two SRS resource sets comprises one or more SRS resources; or
- receiving (702) the instruction comprises receiving (702-3) multiple spatial relations each associated with one of the multiple SRS resources in a respective one of the two SRS resource sets, and

transmitting (704) the plurality of PUSCH repetitions comprises transmitting (704-3) the plurality of PUSCH repetitions based on a first spatial relation associated with one of the SRS resources in the first SRS resource set and a second spatial relation associated with one of the SRS resources in the second SRS resource set.

**6.** The method of claim 2 or 3, wherein:

- transmitting (704) the plurality of PUSCH repetitions further comprises transmitting (704-4) the first group of PUSCH repetitions on even numbered PUSCH repetitions among the plurality of PUSCH repetitions and the second group of PUSCH repetitions on odd numbered PUSCH repetitions among the plurality of PUSCH repetitions; or
- transmitting (704) the plurality of PUSCH repetitions further comprises transmitting (704-5) the first group of PUSCH repetitions on a first number of consecutive PUSCH repetitions among the plurality of PUSCH repetitions, and the second group of PUSCH repetitions on a second number of consecutive PUSCH repetitions subsequent to the first number of PUSCH repetitions among the plurality of PUSCH repetitions.

**7.** The method of any of claims 1 to 6, further comprising applying (706) Redundancy Version, RV, sequence to each of the plurality of PUSCH repetitions.

**8.** The method of claim 1 or 3, further comprising:

receiving (708) the instructions for transmitting the plurality of PUSCH repetitions according to one of the two SRS resource sets, and
transmitting (710) the plurality of PUSCH repetitions according to the one of the two SRS resource sets based on the received instruction; and
optionally, further comprising dynamically switching (712) between transmitting (704) the plurality of PUSCH repetitions according to the two SRS resource sets and transmitting (710) the plurality of PUSCH repetitions according to one of the two SRS resource sets.

**9.** The method of any of claims 1 to 8, wherein each of the first SRS resource set and the second SRS resource set corresponds to a transmission reception point, TRP.

**10.** A wireless device (1500), comprising:
processing circuitry (1502) configured to cause the wireless device (1500) to perform the method of any one of claims 1 to 9.

**11.** A method performed by a base station for enhancing Physical Uplink Shared Channel, PUSCH, reliability, comprising:

transmitting (800), to a wireless device, a configuration of two Sounding Reference Signal, SRS, resource sets, comprising a first SRS resource set and a second SRS resource set;
providing (802) an instruction to the wireless device for transmitting a plurality of PUSCH repetitions according to the two SRS resource sets; and
receiving (804) the plurality of PUSCH repetitions based on the instruction provided to the wireless device,

the method being **characterized in that**:

the plurality of PUSCH repetitions comprises a first group of PUSCH repetitions and a second group of PUSCH repetitions, the second group being complementary to the first group, and the first group of PUSCH repetitions is transmitted according to the first SRS resource set and the second group of PUSCH repetitions is transmitted according to the second SRS resource set,
wherein the two SRS resource sets are configured for codebook based PUSCH transmission, wherein:

- providing (802) the instruction further comprises providing (802-1) the instruction for transmitting the plurality of PUSCH repetitions via codebook based PUSCH transmission, and
- receiving (804) the plurality of PUSCH repetitions comprises receiving (804-1) the first group of PUSCH repetitions among the plurality of PUSCH repetitions according to the first SRS resource set and the second group of PUSCH repetitions among the plurality of PUSCH repetitions according to the second SRS resource set based on the codebook based PUSCH transmission,

wherein the instruction for transmitting the plurality of PUSCH repetitions via the codebook based PUSCH transmission comprises:

- a first SRS Resource Indicator, SRI, indicating a first SRS resource from the first SRS resource set, and a second SRI indicating a second SRS resource from the second SRS resource set, and
- a first Transmit Precoding Matrix Indicator, TPMI, associated with the first SRS resource, and a second TPMI associated with the second SRS resource,

wherein the multiple SRIs are provided in different SRI fields of Downlink Control Information, DCI.

**12.** The method of claim 11, wherein:

- the two TPMIs are independently indicated in two 'Precoding Information and Number of Layers' fields in Downlink Control Information, DCI; and/or
- the two TPMIs are each associated with an identical number of spatial layers, wherein, optionally, at least one Phase Tracking Reference Signal, PTRS, port is associated with the spatial layers in each of the two TPMIs.

**13.** A method performed by a base station for enhancing Physical Uplink Shared Channel, PUSCH, reliability, comprising:

transmitting (800), to a wireless device, a configuration of two Sounding Reference Signal, SRS, resource sets, comprising a first SRS resource set and a second SRS resource set;
providing (802) an instruction to the wireless device for transmitting a plurality of PUSCH repetitions according to the two SRS resource sets; and
receiving (804) the plurality of PUSCH repetitions based on the instruction provided to the wireless device,

the method being **characterized in that**:

the plurality of PUSCH repetitions comprises a first group of PUSCH repetitions and a second group of PUSCH repetitions, the second group being complementary to the first group, and the first group of PUSCH repetitions is transmitted according to the first SRS resource set and the second group of PUSCH repetitions is transmitted according to the second SRS resource set,
wherein the two SRS resources are configured for non-codebook based PUSCH transmission, wherein:

- providing (802) the instruction comprises providing (802-2) the instruction for transmitting the plurality of PUSCH repetitions via non-codebook based PUSCH transmission, and
- receiving (804) the plurality of PUSCH repetitions comprises receiving (804-2) the plurality of PUSCH repetitions according to the first SRS resource and the second SRS resource set based on the non-codebook based PUSCH transmission,

wherein the instruction for transmitting the plurality of PUSCH repetitions via the non-codebook based PUSCH transmission comprises a first SRS Resource Indicator, SRI, indicating one or more SRS resources from the first SRS resource set, and a second SRI indicating one or more SRS resources from the second SRS resource set, and
wherein the multiple SRIs are provided in different SRI fields of Downlink Control Information, DCI.

**14.** The method of claim 13, wherein the instruction for transmitting the plurality of PUSCH repetitions via the non-codebook based transmission further comprises a plurality of spatial layers jointly encoded with each of the first SRI and the second SRI, wherein, optionally:

- receiving (804-2) the plurality of PUSCH repetitions based on the non-codebook based PUSCH transmission comprises receiving (804-2a) each of the plurality of PUSCH repetitions via the non-codebook based PUSCH transmission based on a single spatial layer among the plurality of spatial layers; or
- receiving (804-2) the plurality of PUSCH repetitions based on the non-codebook based PUSCH transmission comprises receiving (804-2b) each of the plurality of PUSCH repetitions via the non-codebook based PUSCH transmission based on multiple spatial layers among the plurality of spatial layers.

**15.** The method of claim 11 or 13, further comprising:

providing (808) the instructions for transmitting the plurality of PUSCH repetitions according to one of the two SRS resource sets; and
receiving (810) the plurality of PUSCH repetitions according to the one of the two SRS resource sets; and
optionally, further comprising dynamically switching (812) between receiving (804) the plurality of PUSCH repetitions according to the two SRS resource sets and receiving (810) the plurality of PUSCH repetitions according to the one of the two SRS resource sets.

**16.** A base station (1200), comprising:
processing circuitry (1202) configured to cause the base station to perform the method of any one of claims 11 to 15.

## Patentansprüche

**1.** Verfahren, das von einer drahtlosen Vorrichtung durchgeführt wird, zur Verbesserung der Zuverlässigkeit des geteilten physikalischen Uplink-Kanals, PUSCH, umfassend:

Empfangen (700) einer Konfiguration von zwei Sounding-Referenzsignal-, SRS, -Ressourcensätzen, die einen ersten SRS-Ressourcensatz und einen zweiten SRS-Ressourcensatz umfassen;
Empfangen (702) einer Anweisung von einem Netzwerkknoten zum Übertragen einer Vielzahl von PUSCH-Wiederholungen gemäß den beiden SRS-Ressourcensätzen; und
Übertragen (704) der Vielzahl von PUSCH-Wiederholungen gemäß dem ersten SRS-Ressourcensatz und dem zweiten SRS-Ressourcensatz auf der Grundlage der empfangenen Anweisung,
wobei das Verfahren **dadurch gekennzeichnet ist, dass**:

die Vielzahl von PUSCH-Wiederholungen eine erste Gruppe von PUSCH-Wiederholungen und eine zweite Gruppe von PUSCH-Wiederholungen umfasst, wobei die zweite Gruppe komplementär zur ersten Gruppe ist, und die erste Gruppe von PUSCH-Wiederholungen gemäß dem ersten SRS-Ressourcensatz und die zweite Gruppe von PUSCH-Wiederholungen gemäß dem zweiten SRS-Ressourcensatz übertragen wird, wobei die beiden SRS-Ressourcensätze für eine codebuchbasierte PUSCH-Übertragung konfiguriert sind, wobei:

- das Empfangen (702) der Anweisung ferner ein Empfangen (702-1) der Anweisung zum Übertragen der Vielzahl von PUSCH-Wiederholungen über codebuchbasierte PUSCH-Übertragung umfasst, und
- das Übertragen (704) der Vielzahl von PUSCH-Wiederholungen ein Übertragen (704-1) der ersten Gruppe von PUSCH-Wiederholungen aus der Vielzahl von PUSCH-Wiederholungen gemäß dem ersten SRS-Ressourcensatz und der zweiten Gruppe von PUSCH-Wiederholungen aus der Vielzahl von PUSCH-Wiederholungen gemäß dem zweiten SRS-Ressourcensatz auf der Grundlage der codebuchbasierten PUSCH-Übertragung umfasst,

wobei die Anweisung zum Übertragen der Vielzahl von PUSCH-Wiederholungen über die codebuchbasierte PUSCH-Übertragung umfasst:

- einen ersten SRS-Ressourcenindikator, SRI, der eine erste SRS-Ressource aus dem ersten SRS-Ressourcensatz angibt, und einen zweiten SRI, der eine zweite SRS-Ressource aus dem zweiten SRS-Ressourcensatz angibt, und
- einen ersten Übertragungspräkodiermatrixindikator, TPMI, der mit der ersten SRS-Ressource assoziiert ist, und einen zweiten TPMI, der mit der zweiten SRS-Ressource assoziiert ist, und

wobei die mehreren SRIs in verschiedenen SRI-Feldern von Downlink-Steuerinformationen, DCI, bereitgestellt werden.

**2.** Verfahren nach Anspruch 1, wobei:

- die beiden TPMIs unabhängig voneinander in zwei Feldern 'Precoding Information and Number of Layers' in den Downlink-Steuerinformationen, DCI, angegeben werden; und/oder
- die beiden TPMIs jeweils mit einer identischen Anzahl räumlicher Schichten assoziiert sind,

wobei optional zumindest ein Port für ein Phasenverfolgungs-Referenzsignal, PTRS, mit den räumlichen Schichten in jedem der beiden TPMIs assoziiert ist.

**3.** Verfahren, das von einer drahtlosen Vorrichtung durchgeführt wird, zur Verbesserung der Zuverlässigkeit des geteilten physikalischen Uplink-Kanals, PUSCH, umfassend:

Empfangen (700) einer Konfiguration von zwei Sounding-Referenzsignal-, SRS, -Ressourcensätzen, die einen ersten SRS-Ressourcensatz und einen zweiten SRS-Ressourcensatz umfassen;
Empfangen (702) einer Anweisung von einem Netzwerkknoten zum Übertragen einer Vielzahl von PUSCH-Wiederholungen gemäß den beiden SRS-Ressourcensätzen; und
Übertragen (704) der Vielzahl von PUSCH-Wiederholungen gemäß dem ersten SRS-Ressourcensatz und dem zweiten SRS-Ressourcensatz auf der Grundlage der empfangenen Anweisung,
wobei das Verfahren **dadurch gekennzeichnet ist, dass**:

die Vielzahl von PUSCH-Wiederholungen eine erste Gruppe von PUSCH-Wiederholungen und eine zweite Gruppe von PUSCH-Wiederholungen umfasst, wobei die zweite Gruppe komplementär zur ersten Gruppe ist, und die erste Gruppe von PUSCH-Wiederholungen gemäß dem ersten SRS-Ressourcensatz und die zweite Gruppe von PUSCH-Wiederholungen gemäß dem zweiten SRS-Ressourcensatz übertragen wird, wobei die beiden SRS-Ressourcensätze für eine nicht-codebuchbasierte PUSCH-Übertragung konfiguriert sind, wobei:

- das Empfangen (702) der Anweisung ein Empfangen (702-2) der Anweisung zum Übertragen der Vielzahl von PUSCH-Wiederholungen über eine nicht-codebuchbasierte PUSCH-Übertragung umfasst, und
- das Übertragen (704) der Vielzahl von PUSCH-Übertragungen das Übertragen (704-2) der Vielzahl von PUSCH-Wiederholungen gemäß dem ersten SRS-Ressourcensatz und dem zweiten SRS-Ressourcensatz auf der Grundlage der nicht-codebuchbasierten PUSCH-Übertragung umfasst,

wobei die Anweisung zum Übertragen der Vielzahl von PUSCH-Wiederholungen über die nicht-codebuchbasierte PUSCH-Übertragung einen ersten SRS-Ressourcenindikator, SRI, der eine oder mehrere SRS-Ressourcen aus dem ersten SRS-Ressourcensatz angibt, und einen zweiten SRI, der eine oder mehrere SRS-Ressourcen aus dem zweiten SRS-Ressourcensatz angibt, umfasst, und
wobei die mehreren SRIs in verschiedenen SRI-Feldern von Downlink-Steuerinformationen, DCI, bereitgestellt werden.

**4.** Verfahren nach Anspruch 3, wobei die Anweisung zum Übertragen der Vielzahl von PUSCH-Wiederholungen über die nicht-codebuchbasierte Übertragung ferner eine Vielzahl räumlicher Schichten umfasst, die gemeinsam mit jedem des ersten SRI und des zweiten SRI codiert sind, wobei optional:

- das Übertragen (704-2) der Vielzahl von PUSCH-Wiederholungen auf der Grundlage der nicht-codebuchbasierten PUSCH-Übertragung ein Übertragen (704-2a) jeder der Vielzahl von PUSCH-Wiederholungen über die nicht-codebuchbasierte PUSCH-Übertragung auf der Grundlage einer einzelnen räumlichen Schicht unter der Vielzahl räumlicher Schichten umfasst; oder
- das Übertragen (704-2) der Vielzahl von PUSCH-Wiederholungen auf der Grundlage der nicht-codebuchbasierten PUSCH-Übertragung ein Übertragen (704-2b) jeder der Vielzahl von PUSCH-Wiederholungen über die nicht-codebuchbasierte PUSCH-Übertragung auf der Grundlage mehrerer räumlicher Schichten unter der Vielzahl räumlicher Schichten umfasst.

**5.** Verfahren nach Anspruch 1 oder 3, wobei:

- jede der beiden SRS-Ressourcensätze eine oder mehrere SRS-Ressourcen umfasst; oder
- das Empfangen (702) der Anweisung ein Empfangen (702-3) mehrerer räumlicher Beziehungen umfasst, die jeweils mit einer der mehreren SRS-Ressourcen in einem jeweiligen der beiden SRS-Ressourcensätze assoziiert sind, und

das Übertragen (704) der Vielzahl von PUSCH-Wiederholungen ein Übertragen (704-3) der Vielzahl von PUSCH-Wiederholungen auf der Grundlage einer ersten räumlichen Beziehung, die mit einer der SRS-Ressourcen in dem ersten SRS-Ressourcensatz assoziiert ist, und einer zweiten räumlichen Beziehung, die mit einer der SRS-Ressourcen in dem zweiten SRS-Ressourcensatz assoziiert ist, umfasst.

**6.** Verfahren nach Anspruch 2 oder 3, wobei:

- das Übertragen (704) der Vielzahl von PUSCH-Wiederholungen ferner ein Übertragen (704-4) der ersten Gruppe von PUSCH-Wiederholungen auf geradzahligen PUSCH-Wiederholungen unter der Vielzahl von PUSCH-Wiederholungen und der zweiten Gruppe von PUSCH-Wiederholungen auf ungeradzahligen PUSCH-Wiederholungen unter der Vielzahl von PUSCH-Wiederholungen umfasst; oder
- das Übertragen (704) der Vielzahl von PUSCH-Wiederholungen ferner ein Übertragen (704-5) der ersten Gruppe von PUSCH-Wiederholungen auf einer ersten Anzahl von aufeinanderfolgenden PUSCH-Wiederholungen aus der Vielzahl von PUSCH-Wiederholungen und der zweiten Gruppe von PUSCH-Wiederholungen auf einer zweiten Anzahl von aufeinanderfolgenden PUSCH-Wiederholungen anschließend an die erste Anzahl von PUSCH-Wiederholungen aus der Vielzahl von PUSCH-Wiederholungen umfasst.

**7.** Verfahren nach einem der Ansprüche 1 bis 6, das ferner ein Anwenden (706) einer Redundanzversions-, RV, -Sequenz auf jede der Vielzahl von PUSCH-Wiederholungen umfasst.

**8.** Verfahren nach Anspruch 1 oder 3, das ferner umfasst:

Empfangen (708) der Anweisungen zum Übertragen der Vielzahl von PUSCH-Wiederholungen gemäß einem der beiden SRS-Ressourcensätze, und
Übertragen (710) der Vielzahl von PUSCH-Wiederholungen gemäß dem einen der beiden SRS-Ressourcensätze auf der Grundlage der empfangenen Anweisung; und
das optional ferner ein dynamisches Umschalten (712) zwischen dem Übertragen (704) der Vielzahl von PUSCH-Wiederholungen gemäß den beiden SRS-Ressourcensätzen und dem Übertragen (710) der Vielzahl von PUSCH-Wiederholungen gemäß einem der beiden SRS-Ressourcensätze umfasst.

**9.** Verfahren nach einem der Ansprüche 1 bis 8, wobei der erste SRS-Ressourcensatz und der zweite SRS-Ressourcensatz jeweils einem Sende-Empfangspunkt, TRP, entsprechen.

**10.** Drahtlose Vorrichtung (1500), die umfasst:
eine Verarbeitungsschaltung (1502), die konfiguriert ist, um die drahtlose Vorrichtung (1500) zu veranlassen, das Verfahren nach einem der Ansprüche 1 bis 9 durchzuführen.

**11.** Verfahren, das von einer Basisstation durchgeführt wird, zur Verbesserung der Zuverlässigkeit des geteilten physikalischen Uplink-Kanals, PUSCH, umfassend:

Übertragen (800), an eine drahtlose Vorrichtung, einer Konfiguration von zwei Sounding-Referenzsignal-, SRS, -Ressourcensätzen, die einen ersten SRS-Ressourcensatz und einen zweiten SRS-Ressourcensatz umfassen;
Bereitstellen (802) einer Anweisung an die drahtlose Vorrichtung zum Übertragen einer Vielzahl von PUSCH-Wiederholungen gemäß den beiden SRS-Ressourcensätzen; und
Empfangen (804) der Vielzahl von PUSCH-Wiederholungen auf der Grundlage der der drahtlosen Vorrichtung bereitgestellten Anweisung,
wobei das Verfahren **dadurch gekennzeichnet ist, dass**:

die Vielzahl von PUSCH-Wiederholungen eine erste Gruppe von PUSCH-Wiederholungen und eine zweite Gruppe von PUSCH-Wiederholungen umfasst, wobei die zweite Gruppe komplementär zur ersten Gruppe ist, und die erste Gruppe von PUSCH-Wiederholungen gemäß dem ersten SRS-Ressourcensatz und die zweite Gruppe von PUSCH-Wiederholungen gemäß dem zweiten SRS-Ressourcensatz übertragen wird, wobei die beiden SRS-Ressourcensätze für eine codebuchbasierte PUSCH-Übertragung konfiguriert sind, wobei:

- das Bereitstellen (802) der Anweisung ferner ein Bereitstellen (802-1) der Anweisung zum Übertragen der Vielzahl von PUSCH-Wiederholungen über codebuchbasierte PUSCH-Übertragung umfasst, und
- das Empfangen (804) der Vielzahl von PUSCH-Wiederholungen ein Empfangen (804-1) der ersten Gruppe von PUSCH-Wiederholungen aus der Vielzahl von PUSCH-Wiederholungen gemäß dem ersten SRS-Ressourcensatz und der zweiten Gruppe von PUSCH-Wiederholungen aus der Vielzahl von PUSCH-Wiederholungen gemäß dem zweiten SRS-Ressourcensatz auf der Grundlage der codebuchbasierten PUSCH-Übertragung umfasst,

wobei die Anweisung zum Übertragen der Vielzahl von PUSCH-Wiederholungen über die codebuchbasierte PUSCH-Übertragung umfasst:

- einen ersten SRS-Ressourcenindikator, SRI, der eine erste SRS-Ressource aus dem ersten SRS-Ressourcensatz angibt, und einen zweiten SRI, der eine zweite SRS-Ressource aus dem zweiten SRS-Ressourcensatz angibt, und
- einen ersten Übertragungspräkodiermatrixindikator, TPMI, der mit der ersten SRS-Ressource assoziiert ist, und einen zweiten TPMI, der mit der zweiten SRS-Ressource assoziiert ist,

wobei die mehreren SRIs in verschiedenen SRI-Feldern der Downlink-Steuerinformationen, DCI, bereitgestellt werden.

**12.** Verfahren nach Anspruch 11, wobei:

- die beiden TPMIs unabhängig voneinander in zwei Feldern 'Precoding Information and Number of Layers' in den Downlink-Steuerinformationen, DCI, angegeben werden; und/oder
- die beiden TPMIs jeweils mit einer identischen Anzahl räumlicher Schichten assoziiert sind,

wobei optional zumindest ein Port für ein Phasenverfolgungs-Referenzsignal, PTRS, mit den räumlichen Schichten in jedem der beiden TPMIs assoziiert ist.

**13.** Verfahren, das von einer Basisstation durchgeführt wird, zur Verbesserung der Zuverlässigkeit des geteilten physikalischen Uplink-Kanals, PUSCH, umfassend:

Übertragen (800), an eine drahtlose Vorrichtung, einer Konfiguration von zwei Sounding-Referenzsignal-, SRS, -Ressourcensätzen, die einen ersten SRS-Ressourcensatz und einen zweiten SRS-Ressourcensatz umfassen;
Bereitstellen (802) einer Anweisung an die drahtlose Vorrichtung zum Übertragen einer Vielzahl von PUSCH-Wiederholungen gemäß den beiden SRS-Ressourcensätzen; und
Empfangen (804) der Vielzahl von PUSCH-Wiederholungen auf der Grundlage der der drahtlosen Vorrichtung bereitgestellten Anweisung,
wobei das Verfahren **dadurch gekennzeichnet ist, dass**:

die Vielzahl von PUSCH-Wiederholungen eine erste Gruppe von PUSCH-Wiederholungen und eine zweite Gruppe von PUSCH-Wiederholungen umfasst, wobei die zweite Gruppe komplementär zur ersten Gruppe ist, und die erste Gruppe von PUSCH-Wiederholungen gemäß dem ersten SRS-Ressourcensatz und die zweite Gruppe von PUSCH-Wiederholungen gemäß dem zweiten SRS-Ressourcensatz übertragen wird, wobei die beiden SRS-Ressourcen für eine nicht-codebuchbasierte PUSCH-Übertragung konfiguriert sind, wobei:

- das Bereitstellen (802) der Anweisung ein Bereitstellen (802-2) der Anweisung zum Übertragen der Vielzahl von PUSCH-Wiederholungen über nicht-codebuchbasierte PUSCH-Übertragung umfasst, und
- das Empfangen (804) der Vielzahl von PUSCH-Wiederholungen ein Empfangen (804-2) der Vielzahl von PUSCH-Wiederholungen gemäß der ersten SRS-Ressource und dem zweiten SRS-Ressourcensatz basierend auf der nicht-codebuchbasierten PUSCH-Übertragung umfasst,

wobei die Anweisung zum Übertragen der Vielzahl von PUSCH-Wiederholungen über die nicht-codebuchbasierte PUSCH-Übertragung einen ersten SRS-Ressourcenindikator, SRI, der eine oder mehrere SRS-Ressourcen aus dem ersten SRS-Ressourcensatz angibt, und einen zweiten SRI, der eine oder mehrere SRS-Ressourcen aus dem zweiten SRS-Ressourcensatz angibt, umfasst, und
wobei die mehreren SRIs in verschiedenen SRI-Feldern von Downlink-Steuerinformationen, DCI, bereitgestellt werden.

**14.** Verfahren nach Anspruch 13, wobei die Anweisung zum Übertragen der Vielzahl von PUSCH-Wiederholungen über die nicht-codebuchbasierte Übertragung ferner eine Vielzahl räumlicher Schichten umfasst, die gemeinsam mit jedem des ersten SRI und des zweiten SRI codiert sind, wobei optional:

- das Empfangen (804-2) der Vielzahl von PUSCH-Wiederholungen auf der Grundlage der nicht-codebuchbasierten PUSCH-Übertragung ein Empfangen (804-2a) jeder der Vielzahl von PUSCH-Wiederholungen über die nicht-codebuchbasierte PUSCH-Übertragung auf der Grundlage einer einzelnen räumlichen Schicht unter der Vielzahl räumlicher Schichten umfasst; oder
- das Empfangen (804-2) der Vielzahl von PUSCH-Wiederholungen auf der Grundlage der nicht-codebuchbasierten PUSCH-Übertragung ein Empfangen (804-2b) jeder der Vielzahl von PUSCH-Wiederholungen über die nicht-codebuchbasierte PUSCH-Übertragung auf der Grundlage mehrerer räumlicher Schichten unter der Vielzahl räumlicher Schichten umfasst.

**15.** Verfahren nach Anspruch 11 oder 13, das ferner umfasst:

Bereitstellen (808) der Anweisungen zum Übertragen der Vielzahl von PUSCH-Wiederholungen gemäß einem der beiden SRS-Ressourcensätze; und
Empfangen (810) der Vielzahl von PUSCH-Wiederholungen gemäß dem einen der beiden SRS-Ressourcensätze; und
das optional ferner ein dynamisches Umschalten (812) zwischen dem Empfangen (804) der Vielzahl von PUSCH-Wiederholungen gemäß den beiden SRS-Ressourcensätzen und dem Empfangen (810) der Vielzahl von PUSCH-Wiederholungen gemäß dem einen der beiden SRS-Ressourcensätze umfasst.

**16.** Basisstation (1200), die umfasst:
eine Verarbeitungsschaltung (1202), die konfiguriert ist, um die Basisstation zu veranlassen, das Verfahren nach einem der Ansprüche 11 bis 15 durchzuführen.

## Revendications

**1.** Procédé mis en œuvre par un dispositif sans fil pour améliorer la fiabilité d'un canal partagé de liaison montante physique, PUSCH, comprenant :

la réception (700) d'une configuration de deux ensembles de ressources de signal de référence de sondage, SRS, comprenant un premier ensemble de ressources SRS et un second ensemble de ressources SRS ;
la réception (702) d'une instruction provenant d'un nœud de réseau pour transmettre une pluralité de répétitions PUSCH selon les deux ensembles de ressources SRS ; et
la transmission (704) de la pluralité de répétitions PUSCH selon le premier ensemble de ressources SRS et le second ensemble de ressources SRS sur la base de l'instruction reçue,
le procédé étant **caractérisé en ce que** :

la pluralité de répétitions PUSCH comprend un premier groupe de répétitions PUSCH et un second groupe de répétitions PUSCH, le second groupe étant complémentaire du premier groupe, et le premier groupe de répétitions PUSCH est transmis selon le premier ensemble de ressources SRS et le second groupe de répétitions PUSCH est transmis selon le second ensemble de ressources SRS,
dans lequel les deux ensembles de ressources SRS sont conçus pour une transmission PUSCH basée sur un livre de codes, dans lequel :

- la réception (702) de l'instruction comprend en outre la réception (702-1) de l'instruction pour la transmission de la pluralité de répétitions PUSCH via une transmission PUSCH basée sur un livre de codes, et
- la transmission (704) de la pluralité de répétitions PUSCH comprend la transmission (704-1) du premier groupe de répétitions PUSCH parmi la pluralité de répétitions PUSCH selon le premier ensemble de ressources SRS et du second groupe de répétitions PUSCH parmi la pluralité de répétitions PUSCH selon le second ensemble de ressources SRS sur la base de la transmission PUSCH basée sur un livre de codes,

dans lequel l'instruction pour la transmission de la pluralité de répétitions PUSCH via la transmission PUSCH basée sur un livre de codes comprend :

- un premier indicateur de ressource SRS, SRI, indiquant une première ressource SRS du premier ensemble de ressources SRS, et un second SRI indiquant une seconde ressource SRS du second ensemble de ressources SRS, et
- un premier indicateur de matrice de précodage de transmission, TPMI, associé à la première ressource SRS, et un second TPMI associé à la seconde ressource SRS, et

dans lequel les multiples SRI sont fournis dans différents champs SRI des informations de commande de liaison descendante, DCI.

**2.** Procédé selon la revendication 1, dans lequel :

- les deux TPMI sont indiqués indépendamment dans deux champs « informations de précodage et nombre de couches » dans les informations de commande de liaison descendante, DCI ; et/ou
- les deux TPMI sont chacun associés à un nombre identique de couches spatiales, dans lequel, éventuellement, au moins un port de signal de référence de suivi de phase, PTRS, est associé aux couches spatiales dans chacun des deux TPMI.

**3.** Procédé mis en œuvre par un dispositif sans fil pour améliorer la fiabilité d'un canal partagé de liaison montante physique, PUSCH, comprenant :

la réception (700) d'une configuration de deux ensembles de ressources de signal de référence de sondage, SRS, comprenant un premier ensemble de ressources SRS et un second ensemble de ressources SRS ;
la réception (702) d'une instruction provenant d'un nœud de réseau pour transmettre une pluralité de répétitions PUSCH selon les deux ensembles de ressources SRS ; et
la transmission (704) de la pluralité de répétitions PUSCH selon le premier ensemble de ressources SRS et le second ensemble de ressources SRS sur la base de l'instruction reçue,
le procédé étant **caractérisé en ce que** :

la pluralité de répétitions PUSCH comprend un premier groupe de répétitions PUSCH et un second groupe de répétitions PUSCH, le second groupe étant complémentaire du premier groupe, et le premier groupe de répétitions PUSCH est transmis selon le premier ensemble de ressources SRS et le second groupe de répétitions PUSCH est transmis selon le second ensemble de ressources SRS,
dans lequel les deux ensembles de ressources SRS sont conçus pour une transmission PUSCH non basée sur un livre de codes, dans lequel :

- la réception (702) de l'instruction comprend la réception (702-2) de l'instruction pour la transmission de la pluralité de répétitions PUSCH via une transmission PUSCH non basée sur un livre de codes, et
- la transmission (704) de la pluralité de transmissions PUSCH comprend la transmission (704-2) de la pluralité de répétitions PUSCH selon le premier ensemble de ressources SRS et le second ensemble de ressources SRS sur la base de la transmission PUSCH non basée sur un livre de codes,

dans lequel l'instruction pour la transmission de la pluralité de répétitions PUSCH via la transmission PUSCH non basée sur un livre de codes comprend un premier indicateur de ressource SRS, SRI, indiquant une ou plusieurs ressources SRS du premier ensemble de ressources SRS, et un second SRI indiquant une ou plusieurs ressources SRS du second ensemble de ressources SRS, et
dans lequel les multiples SRI sont fournis dans différents champs SRI des informations de commande de liaison descendante, DCI.

**4.** Procédé selon la revendication 3, dans lequel l'instruction pour la transmission de la pluralité de répétitions PUSCH via la transmission non basée sur un livre de codes comprend en outre une pluralité de couches spatiales codées conjointement avec chacun des premier SRI et second SRI, dans lequel, éventuellement :

- la transmission (704-2) de la pluralité de répétitions PUSCH sur la base de la transmission PUSCH non basée sur un livre de codes comprend la transmission (704-2a) de chacune de la pluralité de répétitions PUSCH via la transmission PUSCH non basée sur un livre de codes sur la base d'une seule couche spatiale parmi la pluralité de couches spatiales ; ou
- la transmission (704-2) de la pluralité de répétitions PUSCH sur la base de la transmission PUSCH non basée sur un livre de codes comprend la transmission (704-2b) de chacune de la pluralité de répétitions PUSCH via la transmission PUSCH non basée sur un livre de codes sur la base de multiples couches spatiales parmi la pluralité de couches spatiales.

**5.** Procédé selon la revendication 1 ou 3, dans lequel :

- chacun des deux ensembles de ressources SRS comprend une ou plusieurs ressources SRS ; ou
- la réception (702) de l'instruction comprend la réception (702-3) de multiples relations spatiales chacune associée à l'une des multiples ressources SRS dans un ensemble respectif des deux ensembles de ressources SRS, et

la transmission (704) de la pluralité de répétitions PUSCH comprend la transmission (704-3) de la pluralité de répétitions PUSCH sur la base d'une première relation spatiale associée à l'une des ressources SRS dans le premier ensemble de ressources SRS et d'une seconde relation spatiale associée à l'une des ressources SRS dans le second ensemble de ressources SRS.

**6.** Procédé selon la revendication 2 ou 3, dans lequel :

- la transmission (704) de la pluralité de répétitions PUSCH comprend en outre la transmission (704-4) du premier groupe de répétitions PUSCH sur des répétitions PUSCH de numéro pair parmi la pluralité de répétitions PUSCH et du second groupe de répétitions PUSCH sur des répétitions PUSCH de numéro impair parmi la pluralité de répétitions PUSCH ; ou
- la transmission (704) de la pluralité de répétitions PUSCH comprend en outre la transmission (704-5) du premier groupe de répétitions PUSCH sur un premier nombre de répétitions PUSCH consécutives parmi la pluralité de répétitions PUSCH, et du second groupe de répétitions PUSCH sur un second nombre de répétitions PUSCH consécutives suivant le premier nombre de répétitions PUSCH parmi la pluralité de répétitions PUSCH.

**7.** Procédé selon l'une quelconque des revendications 1 à 6, comprenant en outre l'application (706) d'une séquence de version de redondance, RV, à chacune de la pluralité de répétitions PUSCH.

**8.** Procédé selon la revendication 1 ou 3, comprenant en outre :

la réception (708) des instructions pour transmettre la pluralité de répétitions PUSCH selon l'un des deux ensembles de ressources SRS, et
la transmission (710) de la pluralité de répétitions PUSCH selon l'un des deux ensembles de ressources SRS sur la base de l'instruction reçue ; et
éventuellement, comprenant en outre la commutation dynamique (712) entre la transmission (704) de la pluralité de répétitions PUSCH selon les deux ensembles de ressources SRS et la transmission (710) de la pluralité de répétitions PUSCH selon l'un des deux ensembles de ressources SRS.

**9.** Procédé selon l'une quelconque des revendications 1 à 8, dans lequel chacun du premier ensemble de ressources SRS et du second ensemble de ressources SRS correspond à un point de réception de transmission, TRP.

**10.** Dispositif sans fil (1500), comprenant :
des circuits de traitement (1502) conçus pour amener le dispositif sans fil (1500) à mettre en œuvre le procédé selon l'une quelconque des revendications 1 à 9.

**11.** Procédé mis en œuvre par une station de base pour améliorer la fiabilité d'un canal partagé de liaison montante physique, PUSCH, comprenant :

la transmission (800), à un dispositif sans fil, d'une configuration de deux ensembles de ressources de signal de référence de sondage, SRS, comprenant un premier ensemble de ressources SRS et un second ensemble de ressources SRS ;
la fourniture (802) d'une instruction au dispositif sans fil pour la transmission d'une pluralité de répétitions PUSCH selon les deux ensembles de ressources SRS ; et
la réception (804) de la pluralité de répétitions PUSCH sur la base de l'instruction fournie au dispositif sans fil, le procédé étant **caractérisé en ce que** :

la pluralité de répétitions PUSCH comprend un premier groupe de répétitions PUSCH et un second groupe de répétitions PUSCH, le second groupe étant complémentaire du premier groupe, et le premier groupe de répétitions PUSCH est transmis selon le premier ensemble de ressources SRS et le second groupe de répétitions PUSCH est transmis selon le second ensemble de ressources SRS,
dans lequel les deux ensembles de ressources SRS sont conçus pour une transmission PUSCH basée sur un livre de codes, dans lequel :

- la fourniture (802) de l'instruction comprend en outre la fourniture (802-1) de l'instruction pour la transmission de la pluralité de répétitions PUSCH via une transmission PUSCH basée sur un livre de codes, et
- la réception (804) de la pluralité de répétitions PUSCH comprend la réception (804-1) du premier groupe de répétitions PUSCH parmi la pluralité de répétitions PUSCH selon le premier ensemble de ressources SRS et du second groupe de répétitions PUSCH parmi la pluralité de répétitions PUSCH selon le second ensemble de ressources SRS sur la base de la transmission PUSCH basée sur un livre de codes,

dans lequel l'instruction pour la transmission de la pluralité de répétitions PUSCH via la transmission PUSCH basée sur un livre de codes comprend :

- un premier indicateur de ressource SRS, SRI, indiquant une première ressource SRS du premier ensemble de ressources SRS, et un second SRI indiquant une seconde ressource SRS du second ensemble de ressources SRS, et
- un premier indicateur de matrice de précodage de transmission, TPMI, associé à la première ressource SRS, et un second TPMI associé à la seconde ressource SRS,

dans lequel les multiples SRI sont fournis dans différents champs SRI des informations de commande de liaison descendante, DCI.

**12.** Procédé selon la revendication 11, dans lequel :

- les deux TPMI sont indiqués indépendamment dans deux champs « informations de précodage et nombre de couches » dans les informations de commande de liaison descendante, DCI ; et/ou
- les deux TPMI sont chacun associés à un nombre identique de couches spatiales, dans lequel, éventuellement, au moins un port de signal de référence de suivi de phase, PTRS, est associé aux couches spatiales dans chacun des deux TPMI.

**13.** Procédé mis en œuvre par une station de base pour améliorer la fiabilité d'un canal partagé de liaison montante physique, PUSCH, comprenant :

la transmission (800), à un dispositif sans fil, d'une configuration de deux ensembles de ressources de signal de référence de sondage, SRS, comprenant un premier ensemble de ressources SRS et un second ensemble de ressources SRS ;
la fourniture (802) d'une instruction au dispositif sans fil pour la transmission d'une pluralité de répétitions PUSCH selon les deux ensembles de ressources SRS ; et
la réception (804) de la pluralité de répétitions PUSCH sur la base de l'instruction fournie au dispositif sans fil, le procédé étant **caractérisé en ce que** :

la pluralité de répétitions PUSCH comprend un premier groupe de répétitions PUSCH et un second groupe de répétitions PUSCH, le second groupe étant complémentaire du premier groupe, et le premier groupe de répétitions PUSCH est transmis selon le premier ensemble de ressources SRS et le second groupe de répétitions PUSCH est transmis selon le second ensemble de ressources SRS,
dans lequel les deux ressources SRS sont conçues pour une transmission PUSCH non basée sur un livre de codes, dans lequel :

- la fourniture (802) de l'instruction comprend la fourniture (802-2) de l'instruction pour la transmission de la pluralité de répétitions PUSCH via une transmission PUSCH non basée sur un livre de codes, et
- la réception (804) de la pluralité de répétitions PUSCH comprend la réception (804-2) de la pluralité de répétitions PUSCH selon le premier ensemble de ressources SRS et le second ensemble de ressources SRS sur la base de la transmission PUSCH non basée sur un livre de codes,

dans lequel l'instruction pour la transmission de la pluralité de répétitions PUSCH via la transmission PUSCH non basée sur un livre de codes comprend un premier indicateur de ressource SRS, SRI, indiquant une ou plusieurs ressources SRS du premier ensemble de ressources SRS, et un second SRI indiquant une ou plusieurs ressources SRS du second ensemble de ressources SRS, et
dans lequel les multiples SRI sont fournis dans différents champs SRI des informations de commande de liaison descendante, DCI.

**14.** Procédé selon la revendication 13, dans lequel l'instruction pour la transmission de la pluralité de répétitions PUSCH via la transmission non basée sur un livre de codes comprend en outre une pluralité de couches spatiales codées conjointement avec chacun du premier SRI et du second SRI, dans lequel, éventuellement :

- la réception (804-2) de la pluralité de répétitions PUSCH sur la base de la transmission PUSCH non basée sur un livre de codes comprend la réception (804-2a) de chacune de la pluralité de répétitions PUSCH via la transmission PUSCH non basée sur un livre de codes sur la base d'une seule couche spatiale parmi la pluralité de couches spatiales ; ou
- la réception (804-2) de la pluralité de répétitions PUSCH sur la base de la transmission PUSCH non basée sur un livre de codes comprend la réception (804-2b) de chacune de la pluralité de répétitions PUSCH via la transmission PUSCH non basée sur un livre de codes sur la base de multiples couches spatiales parmi la pluralité de couches spatiales.

**15.** Procédé selon la revendication 11 ou 13, comprenant en outre :

la fourniture (808) des instructions pour transmettre la pluralité de répétitions PUSCH selon l'un des deux ensembles de ressources SRS ; et
la réception (810) de la pluralité de répétitions PUSCH selon l'un des deux ensembles de ressources SRS ; et éventuellement, comprenant en outre la commutation dynamique (812) entre la réception (804) de la pluralité de répétitions PUSCH selon les deux ensembles de ressources SRS et la réception (810) de la pluralité de répétitions PUSCH selon l'un des deux ensembles de ressources SRS.

**16.** Station de base (1200), comprenant :
des circuits de traitement (1202) conçus pour amener la station de base à mettre en œuvre le procédé selon l'une quelconque des revendications 11 à 15.

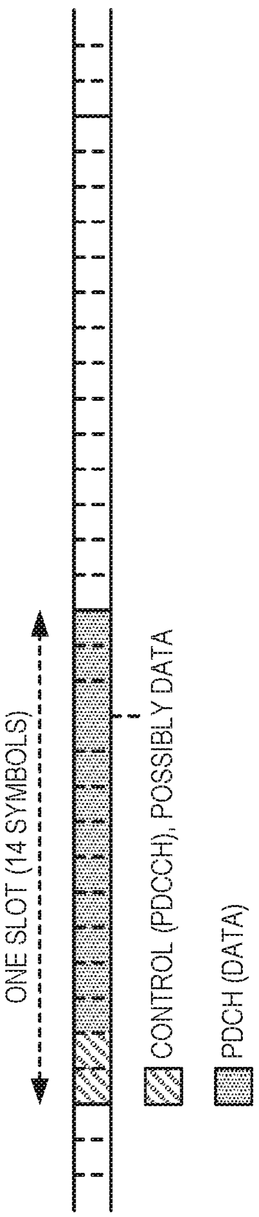
ONE SLOT (14 SYMBOLS)
CONTROL (PDCCH), POSSIBLY DATA
PDCH (DATA)

*FIG. 1*

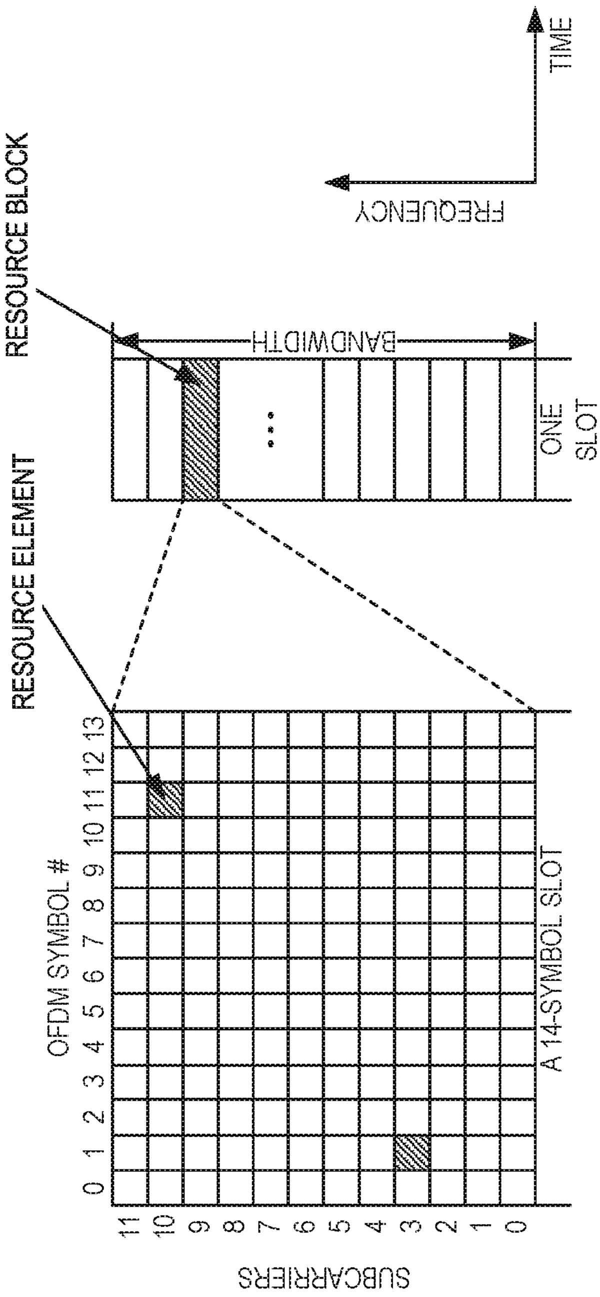
RESOURCE ELEMENT
RESOURCE BLOCK
OFDM SYMBOL #
0 1 2 3 4 5 6 7 8 9 10 11 12 13
SUBCARRIERS
11 10 9 8 7 6 5 4 3 2 1 0
A 14-SYMBOL SLOT
ONE SLOT
BANDWIDTH
FREQUENCY
TIME

*FIG. 2*

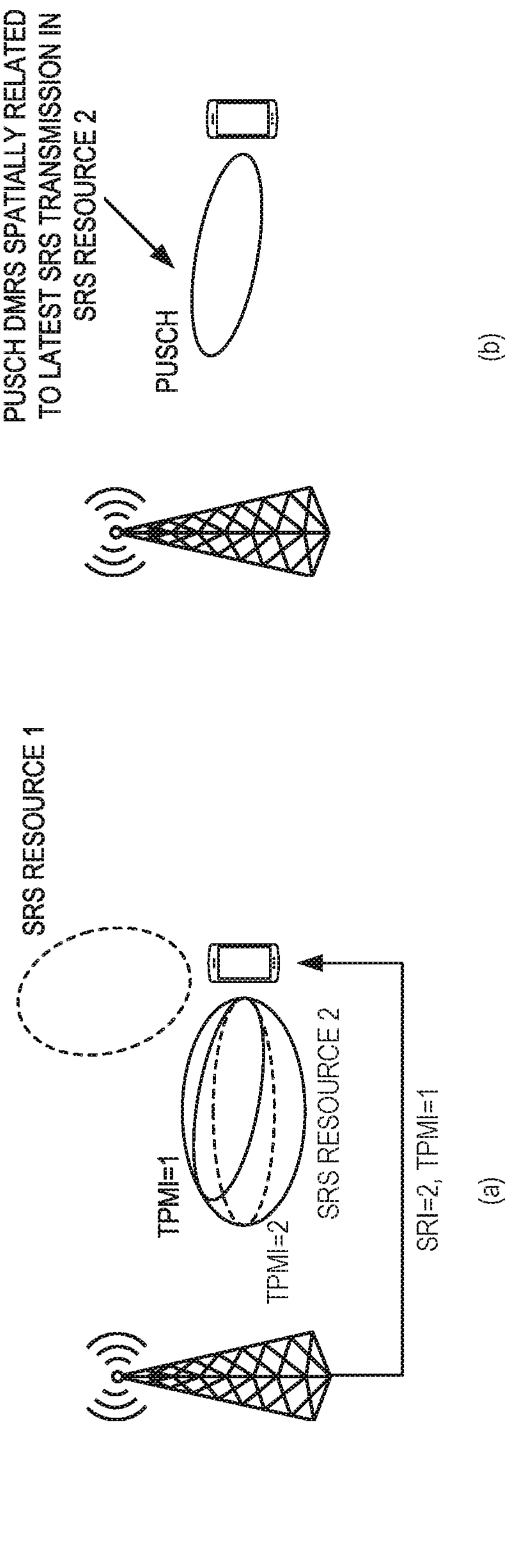
SRS RESOURCE 1
TPMI=1
TPMI=2
SRS RESOURCE 2
SRI=2, TPMI=1
(a)
PUSCH DMRS SPATIALLY RELATED TO LATEST SRS TRANSMISSION IN SRS RESOURCE 2
PUSCH
(b)

FIG. 3

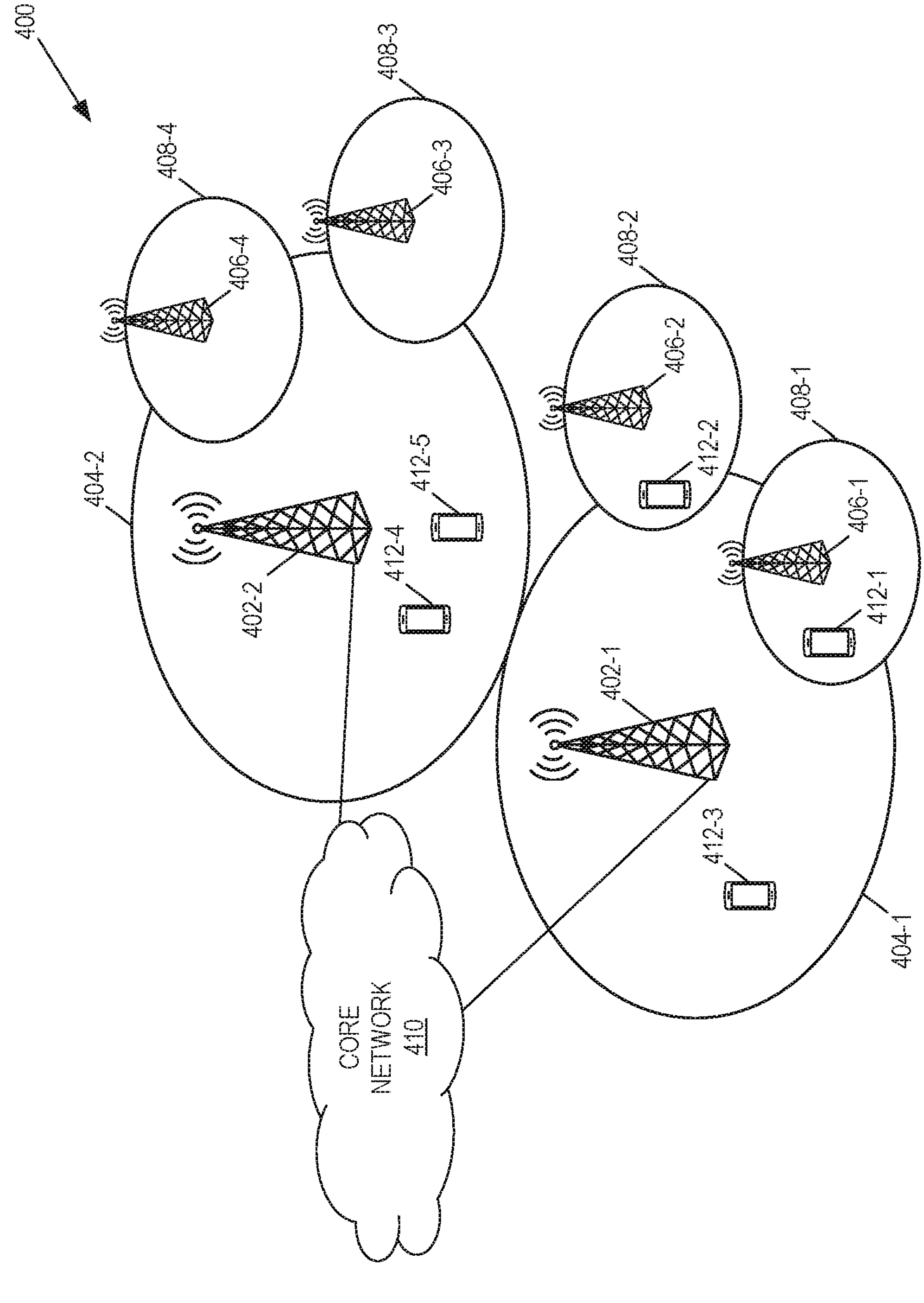
400
408-4
408-3
406-4
406-3
404-2
402-2
412-4
412-5
408-2
406-2
412-2
408-1
406-1
412-1
402-1
412-3
404-1
CORE
NETWORK
410

FIG. 4

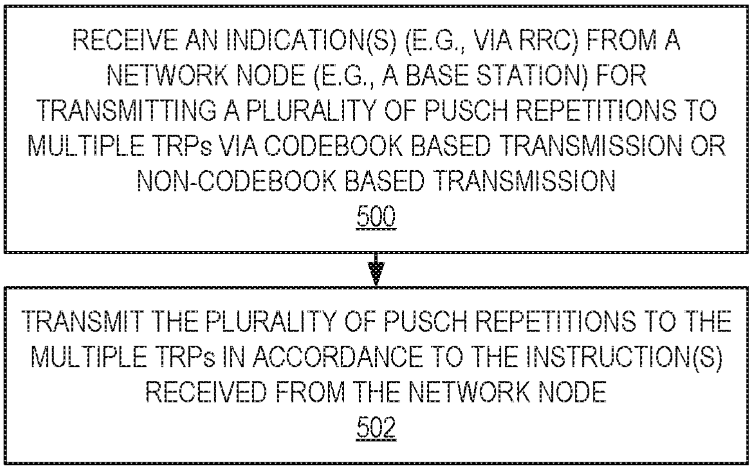
RECEIVE AN INDICATION(S) (E.G., VIA RRC) FROM A NETWORK NODE (E.G., A BASE STATION) FOR TRANSMITTING A PLURALITY OF PUSCH REPETITIONS TO MULTIPLE TRPs VIA CODEBOOK BASED TRANSMISSION OR NON-CODEBOOK BASED TRANSMISSION
500
TRANSMIT THE PLURALITY OF PUSCH REPETITIONS TO THE MULTIPLE TRPs IN ACCORDANCE TO THE INSTRUCTION(S) RECEIVED FROM THE NETWORK NODE
502

*FIG. 5*

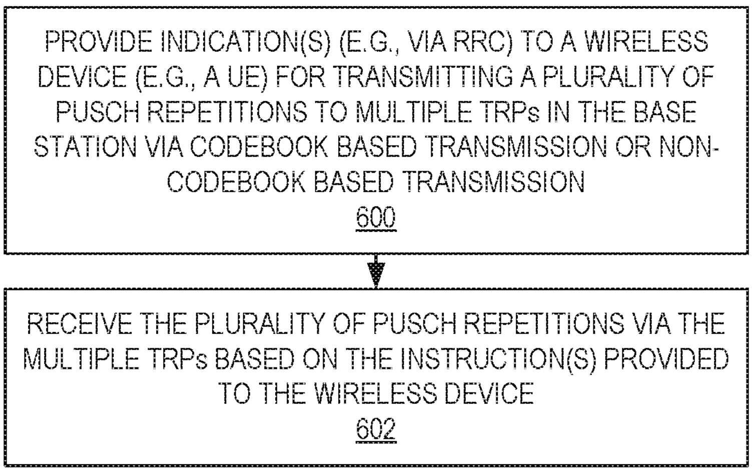
PROVIDE INDICATION(S) (E.G., VIA RRC) TO A WIRELESS DEVICE (E.G., A UE) FOR TRANSMITTING A PLURALITY OF PUSCH REPETITIONS TO MULTIPLE TRPs IN THE BASE STATION VIA CODEBOOK BASED TRANSMISSION OR NON-CODEBOOK BASED TRANSMISSION
600
RECEIVE THE PLURALITY OF PUSCH REPETITIONS VIA THE MULTIPLE TRPs BASED ON THE INSTRUCTION(S) PROVIDED TO THE WIRELESS DEVICE
602

*FIG. 6*

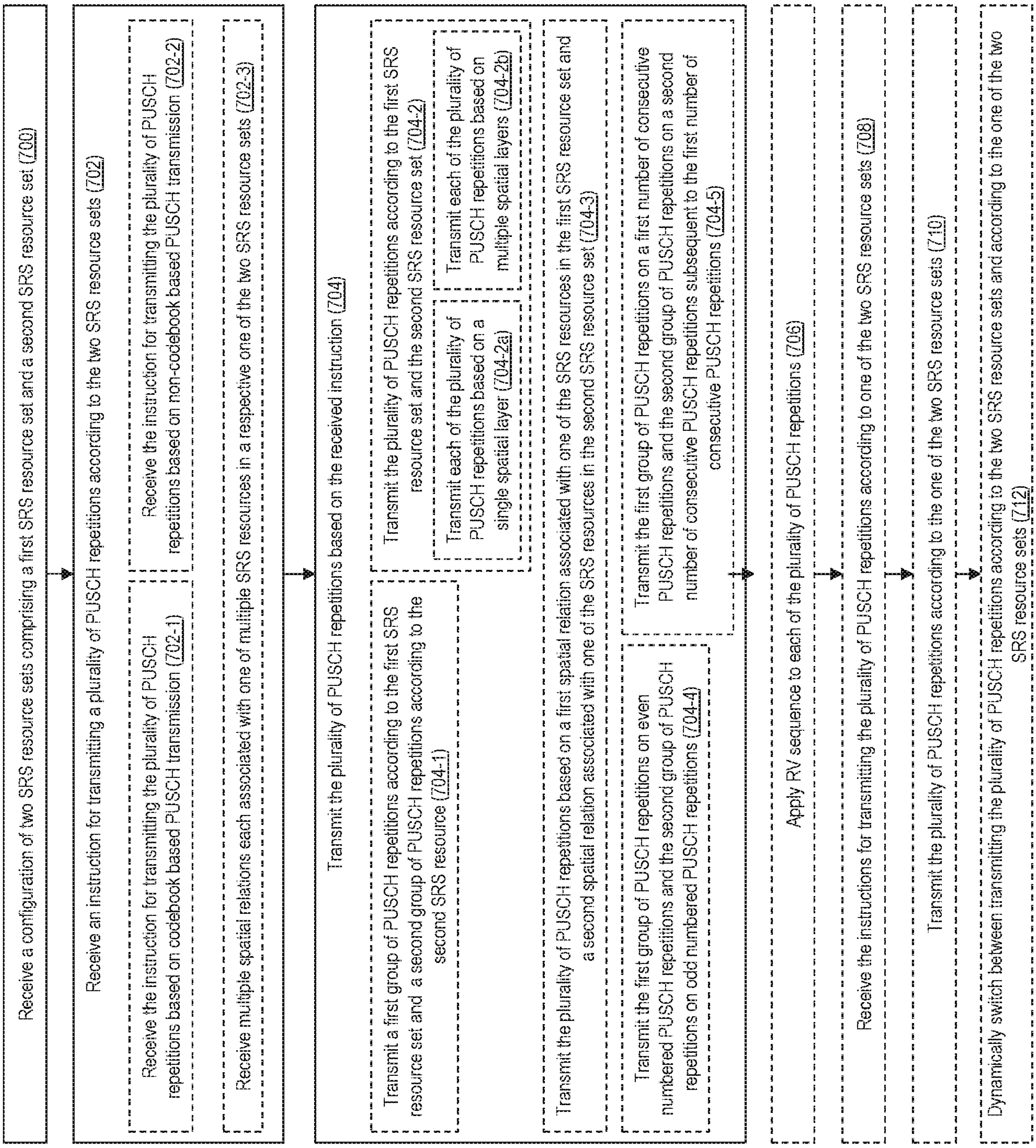
Receive a configuration of two SRS resource sets comprising a first SRS resource set and a second SRS resource set (700)
Receive an instruction for transmitting a plurality of PUSCH repetitions according to the two SRS resource sets (702)
Receive the instruction for transmitting the plurality of PUSCH repetitions based on codebook based PUSCH transmission (702-1)
Receive the instruction for transmitting the plurality of PUSCH repetitions based on non-codebook based PUSCH transmission (702-2)
Receive multiple spatial relations each associated with one of multiple SRS resources in a respective one of the two SRS resource sets (702-3)
Transmit the plurality of PUSCH repetitions based on the received instruction (704)
Transmit a first group of PUSCH repetitions according to the first SRS resource set and a second group of PUSCH repetitions according to the second SRS resource (704-1)
Transmit the plurality of PUSCH repetitions according to the first SRS resource set and the second SRS resource set (704-2)
Transmit each of the plurality of PUSCH repetitions based on a single spatial layer (704-2a)
Transmit each of the plurality of PUSCH repetitions based on multiple spatial layers (704-2b)
Transmit the plurality of PUSCH repetitions based on a first spatial relation associated with one of the SRS resources in the first SRS resource set and a second spatial relation associated with one of the SRS resources in the second SRS resource set (704-3)
Transmit the first group of PUSCH repetitions on even numbered PUSCH repetitions and the second group of PUSCH repetitions on odd numbered PUSCH repetitions (704-4)
Transmit the first group of PUSCH repetitions on a first number of consecutive PUSCH repetitions and the second group of PUSCH repetitions on a second number of consecutive PUSCH repetitions subsequent to the first number of consecutive PUSCH repetitions (704-5)
Apply RV sequence to each of the plurality of PUSCH repetitions (706)
Receive the instructions for transmitting the plurality of PUSCH repetitions according to one of the two SRS resource sets (708)
Transmit the plurality of PUSCH repetitions according to the one of the two SRS resource sets (710)
Dynamically switch between transmitting the plurality of PUSCH repetitions according to the two SRS resource sets and according to the one of the two SRS resource sets (712)

*FIG. 7*

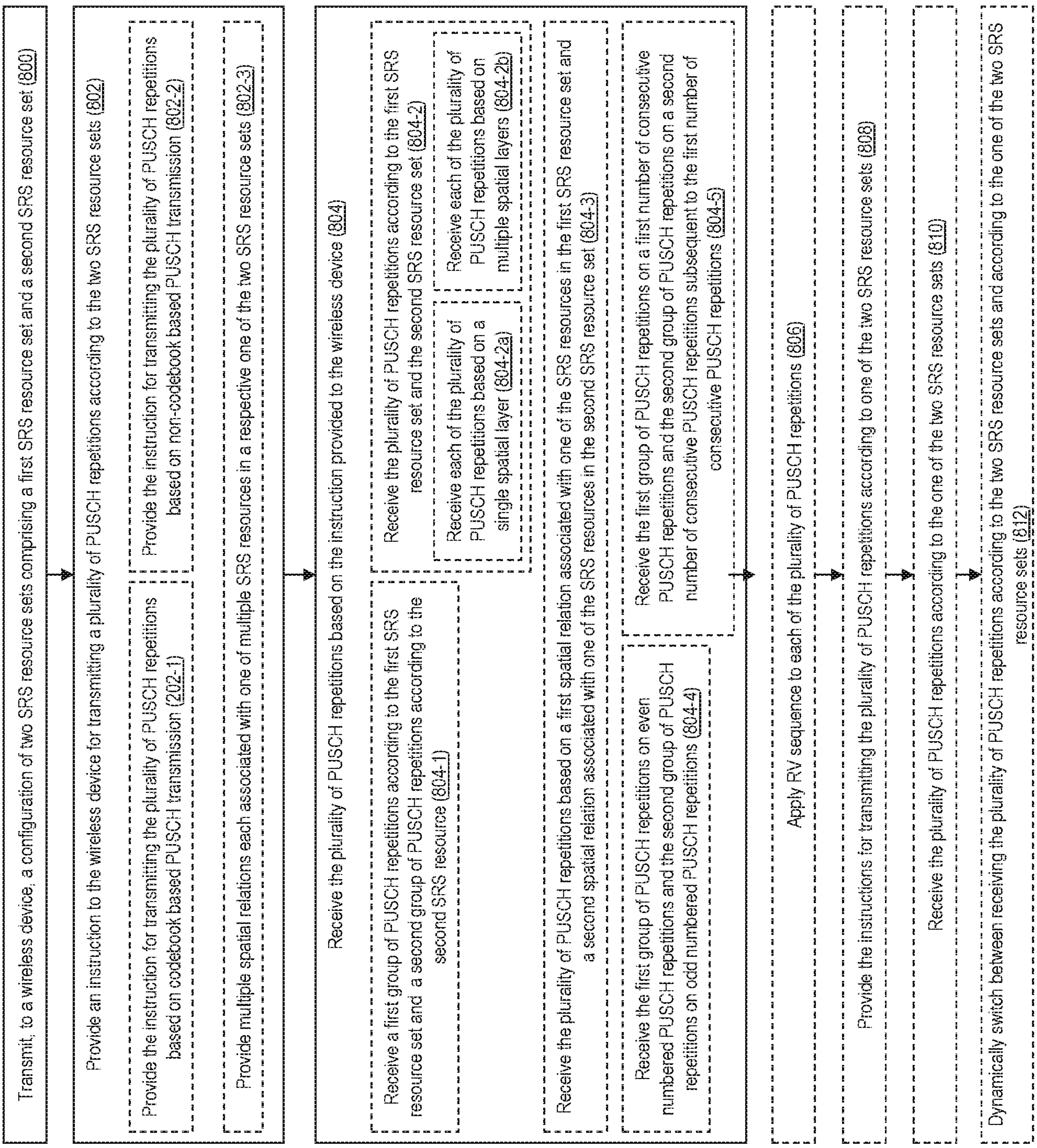
Transmit, to a wireless device, a configuration of two SRS resource sets comprising a first SRS resource set and a second SRS resource set (800)
Provide an instruction to the wireless device for transmitting a plurality of PUSCH repetitions according to the two SRS resource sets (802)
Provide the instruction for transmitting the plurality of PUSCH repetitions based on codebook based PUSCH transmission (202-1)
Provide the instruction for transmitting the plurality of PUSCH repetitions based on non-codebook based PUSCH transmission (802-2)
Provide multiple spatial relations each associated with one of multiple SRS resources in a respective one of the two SRS resource sets (802-3)
Receive the plurality of PUSCH repetitions based on the instruction provided to the wireless device (804)
Receive a first group of PUSCH repetitions according to the first SRS resource set and a second group of PUSCH repetitions according to the second SRS resource (804-1)
Receive the plurality of PUSCH repetitions according to the first SRS resource set and the second SRS resource set (804-2)
Receive each of the plurality of PUSCH repetitions based on a single spatial layer (804-2a)
Receive each of the plurality of PUSCH repetitions based on multiple spatial layers (804-2b)
Receive the plurality of PUSCH repetitions based on a first spatial relation associated with one of the SRS resources in the first SRS resource set and a second spatial relation associated with one of the SRS resources in the second SRS resource set (804-3)
Receive the first group of PUSCH repetitions on even numbered PUSCH repetitions and the second group of PUSCH repetitions on odd numbered PUSCH repetitions (804-4)
Receive the first group of PUSCH repetitions on a first number of consecutive PUSCH repetitions and the second group of PUSCH repetitions on a second number of consecutive PUSCH repetitions subsequent to the first number of consecutive PUSCH repetitions (804-5)
Apply RV sequence to each of the plurality of PUSCH repetitions (806)
Provide the instructions for transmitting the plurality of PUSCH repetitions according to one of the two SRS resource sets (808)
Receive the plurality of PUSCH repetitions according to the one of the two SRS resource sets (810)
Dynamically switch between receiving the plurality of PUSCH repetitions according to the two SRS resource sets and according to the one of the two SRS resource sets (812)

*FIG. 8*

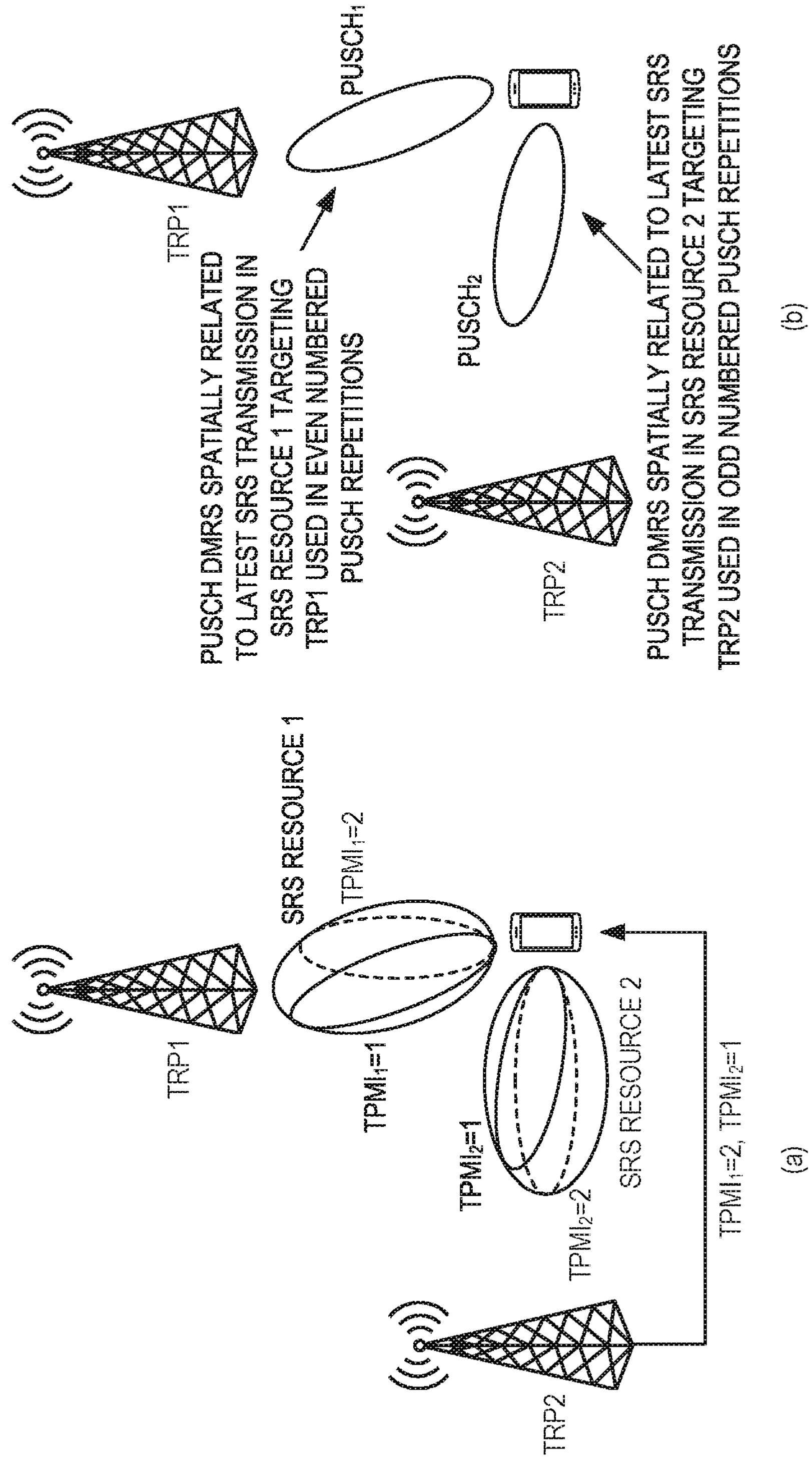
TRP1
TRP2
TPMI1=1
TPMI1=2
SRS RESOURCE 1
TPMI2=1
TPMI2=2
SRS RESOURCE 2
TPMI1=2, TPMI2=1
(a)
TRP1
TRP2
PUSCH1
PUSCH2
PUSCH DMRS SPATIALLY RELATED TO LATEST SRS TRANSMISSION IN SRS RESOURCE 1 TARGETING TRP1 USED IN EVEN NUMBERED PUSCH REPETITIONS
PUSCH DMRS SPATIALLY RELATED TO LATEST SRS TRANSMISSION IN SRS RESOURCE 2 TARGETING TRP2 USED IN ODD NUMBERED PUSCH REPETITIONS
(b)

*FIG. 9*

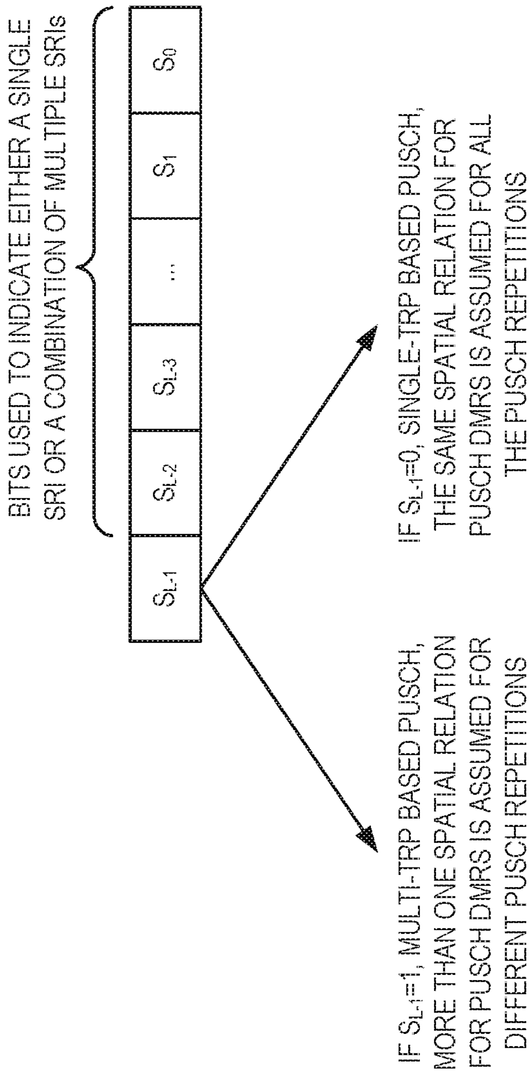
BITS USED TO INDICATE EITHER A SINGLE SRI OR A COMBINATION OF MULTIPLE SRIs
$S_{L-1}$
$S_{L-2}$
$S_{L-3}$
...
$S_1$
$S_0$
IF $S_{L-1}$=1, MULTI-TRP BASED PUSCH, MORE THAN ONE SPATIAL RELATION FOR PUSCH DMRS IS ASSUMED FOR DIFFERENT PUSCH REPETITIONS
IF $S_{L-1}$=0, SINGLE-TRP BASED PUSCH, THE SAME SPATIAL RELATION FOR PUSCH DMRS IS ASSUMED FOR ALL THE PUSCH REPETITIONS

FIG. 10

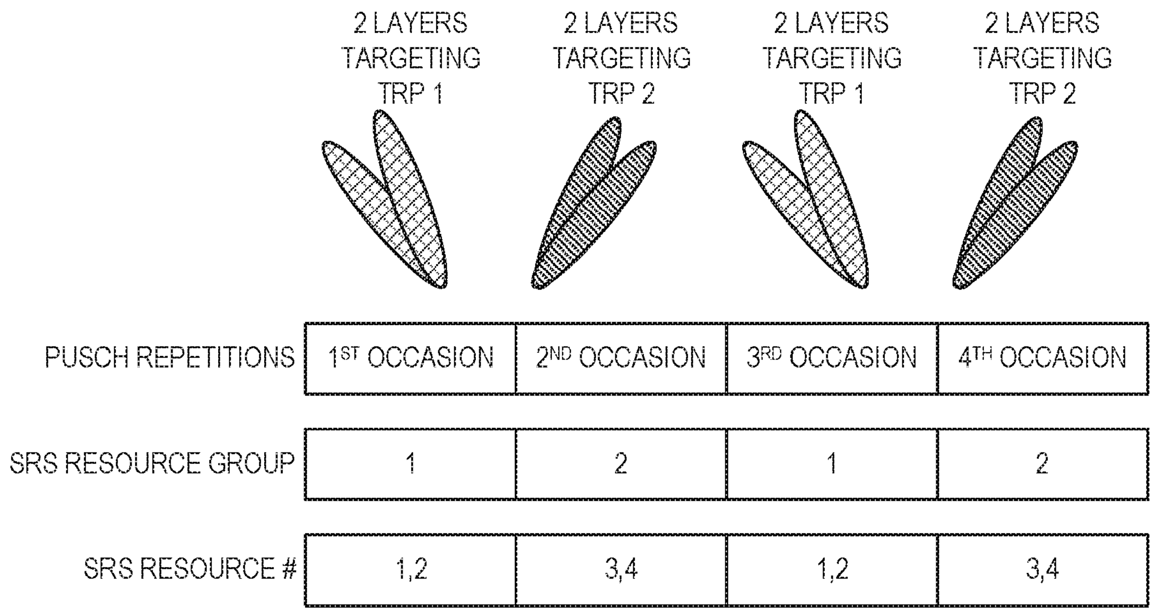
2 LAYERS TARGETING TRP 1
2 LAYERS TARGETING TRP 2
2 LAYERS TARGETING TRP 1
2 LAYERS TARGETING TRP 2
PUSCH REPETITIONS
1ST OCCASION
2ND OCCASION
3RD OCCASION
4TH OCCASION
SRS RESOURCE GROUP
1
2
1
2
SRS RESOURCE #
1,2
3,4
1,2
3,4

FIG. 11

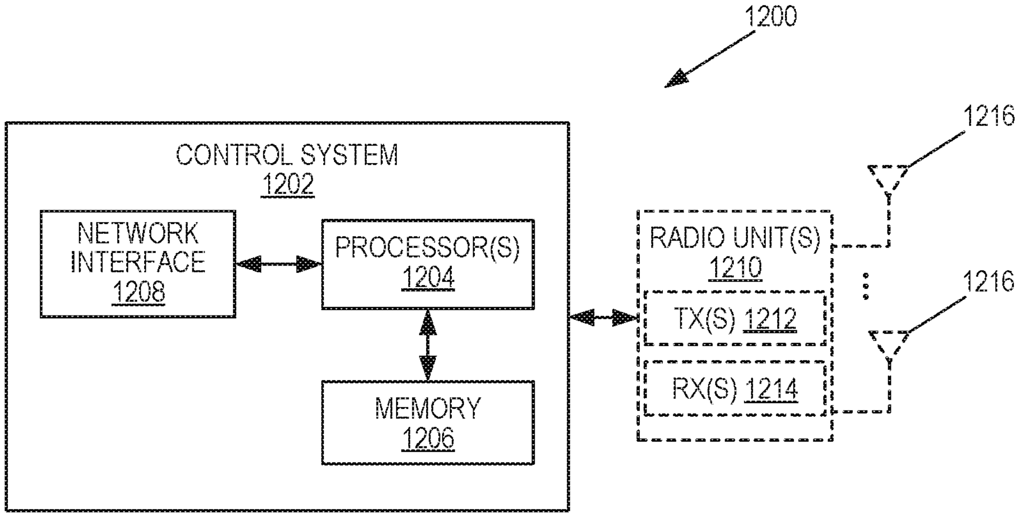
1200
CONTROL SYSTEM
1202
NETWORK INTERFACE
1208
PROCESSOR(S)
1204
MEMORY
1206
RADIO UNIT(S)
1210
TX(S) 1212
RX(S) 1214
1216
1216

FIG. 12

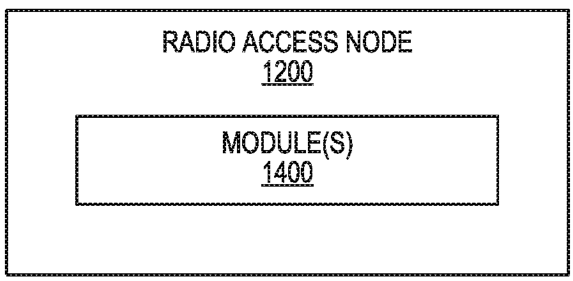
RADIO ACCESS NODE
1200
MODULE(S)
1400

FIG. 14

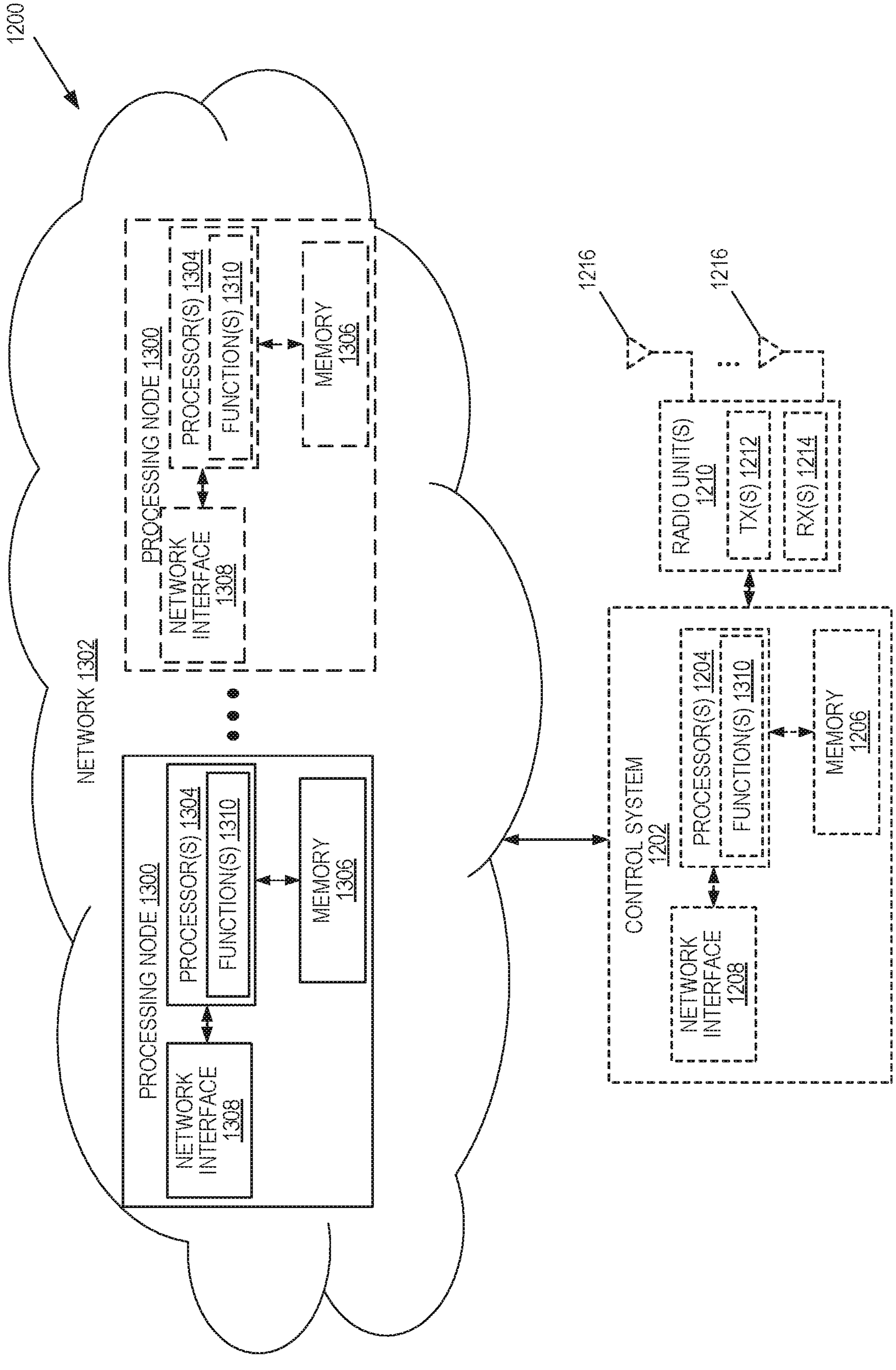
1200
NETWORK 1302
PROCESSING NODE 1300
NETWORK INTERFACE 1308
PROCESSOR(S) 1304
FUNCTION(S) 1310
MEMORY 1306
PROCESSING NODE 1300
NETWORK INTERFACE 1308
PROCESSOR(S) 1304
FUNCTION(S) 1310
MEMORY 1306
CONTROL SYSTEM 1202
NETWORK INTERFACE 1208
PROCESSOR(S) 1204
FUNCTION(S) 1310
MEMORY 1206
RADIO UNIT(S) 1210
TX(S) 1212
RX(S) 1214
1216
1216

FIG. 13

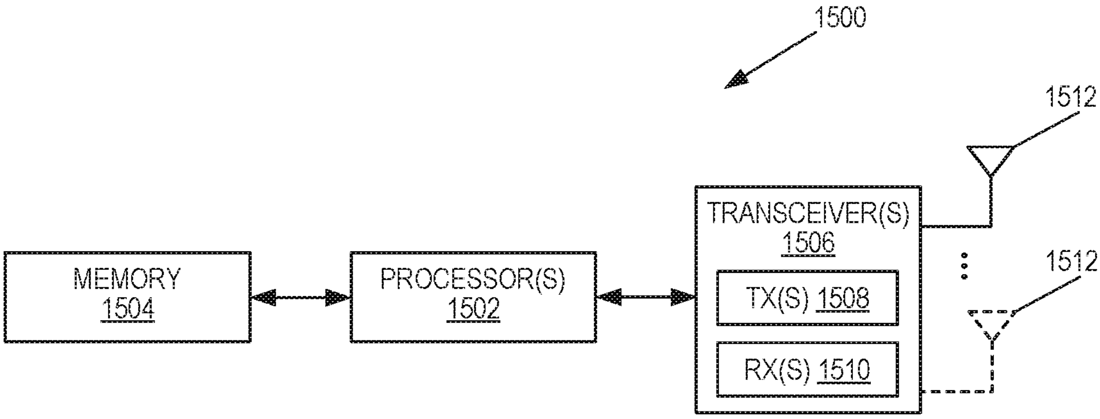
1500
1512
TRANSCEIVER(S)
1506
1512
MEMORY
1504
PROCESSOR(S)
1502
TX(S) 1508
RX(S) 1510

FIG. 15

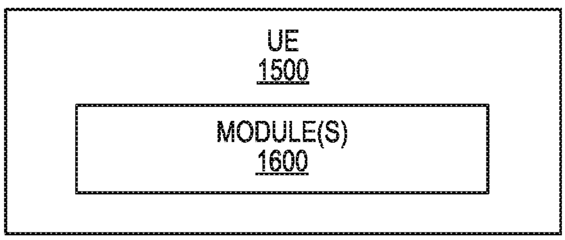
UE
1500
MODULE(S)
1600

FIG. 16

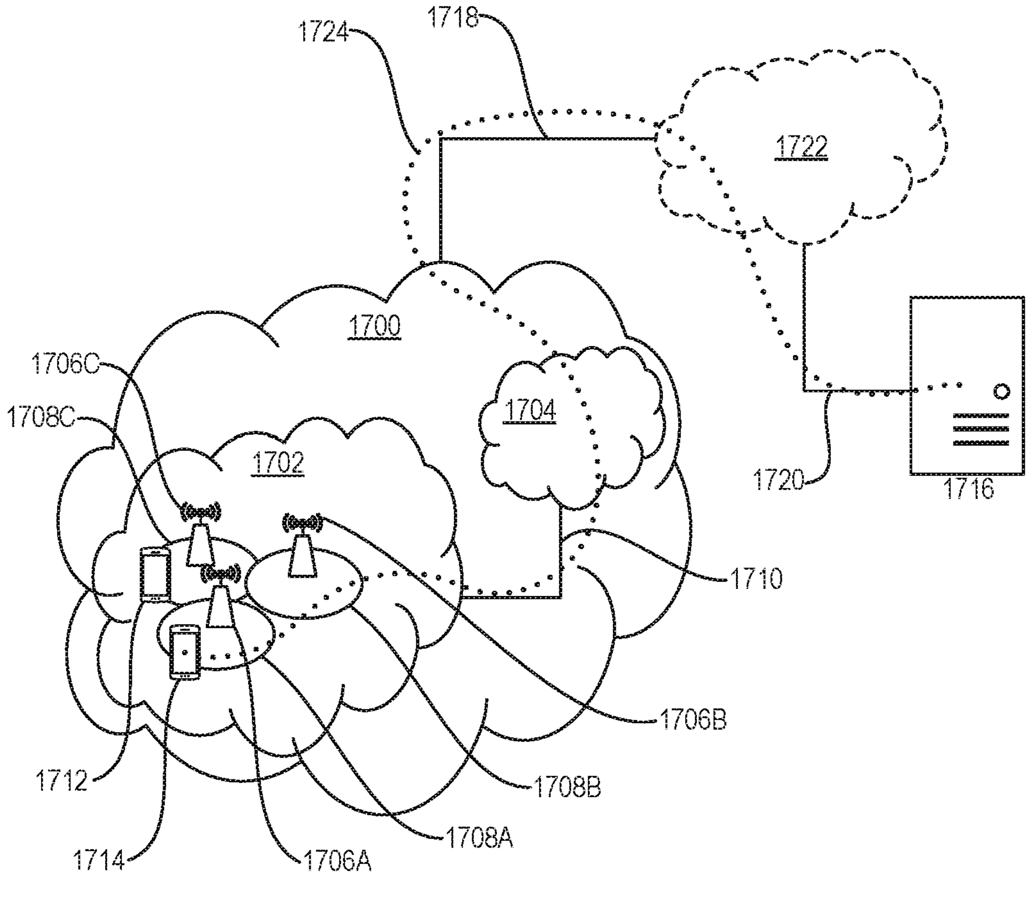
1724
1718
1722
1700
1706C
1708C
1704
1702
1720
1716
1710
1706B
1712
1708B
1708A
1714
1706A

FIG. 17

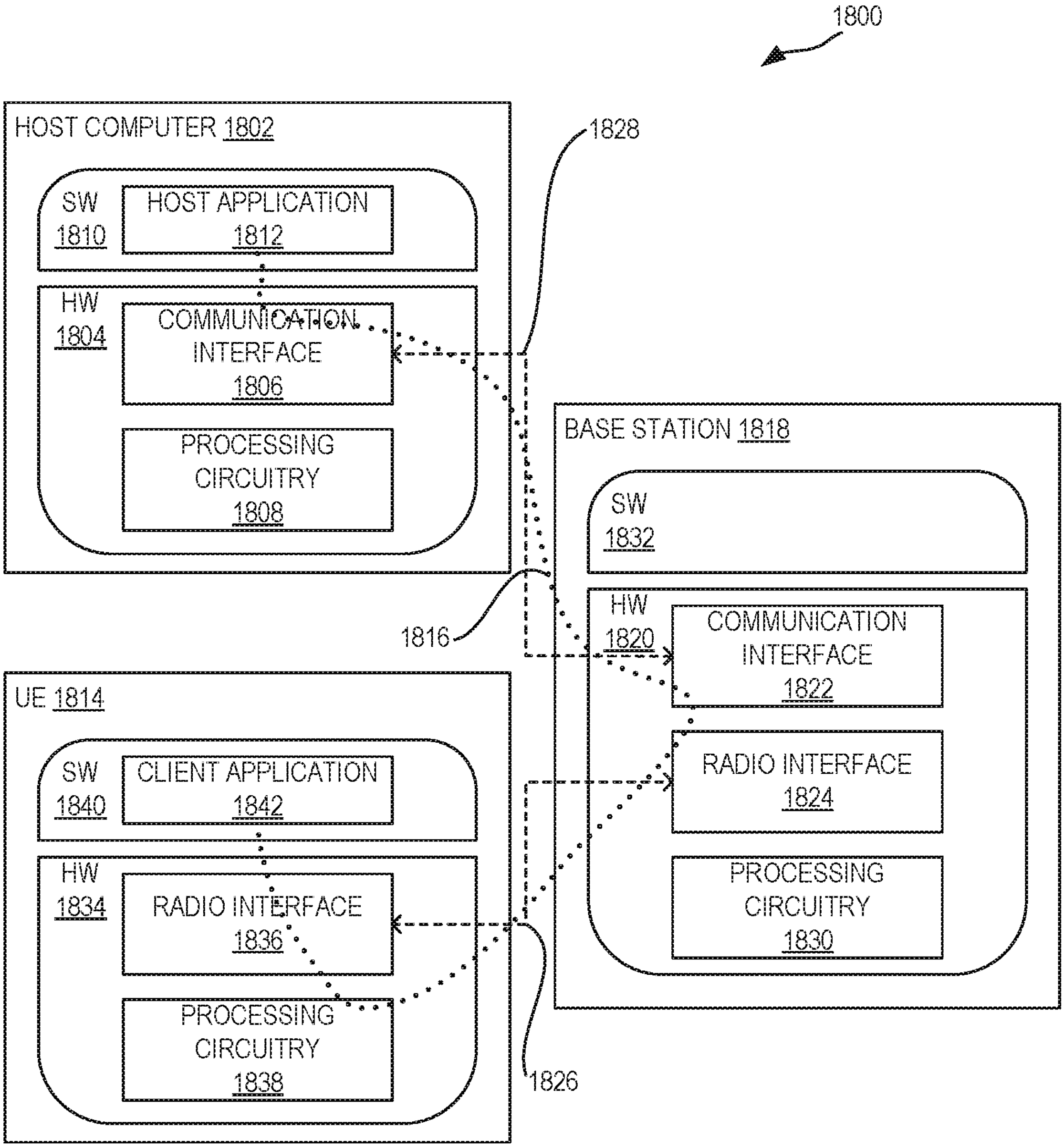
1800
HOST COMPUTER 1802
SW
1810
HOST APPLICATION
1812
HW
1804
COMMUNICATION
INTERFACE
1806
PROCESSING
CIRCUITRY
1808
1828
BASE STATION 1818
SW
1832
HW
1820
COMMUNICATION
INTERFACE
1822
RADIO INTERFACE
1824
PROCESSING
CIRCUITRY
1830
1816
UE 1814
SW
1840
CLIENT APPLICATION
1842
HW
1834
RADIO INTERFACE
1836
PROCESSING
CIRCUITRY
1838
1826

FIG. 18

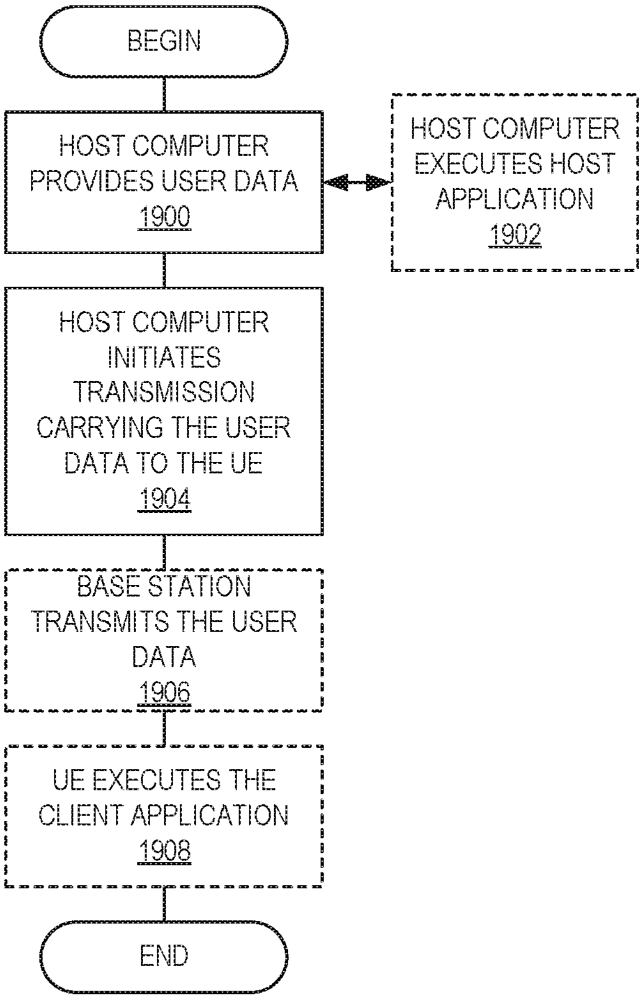
BEGIN
HOST COMPUTER PROVIDES USER DATA 1900
HOST COMPUTER EXECUTES HOST APPLICATION 1902
HOST COMPUTER INITIATES TRANSMISSION CARRYING THE USER DATA TO THE UE 1904
BASE STATION TRANSMITS THE USER DATA 1906
UE EXECUTES THE CLIENT APPLICATION 1908
END

FIG. 19

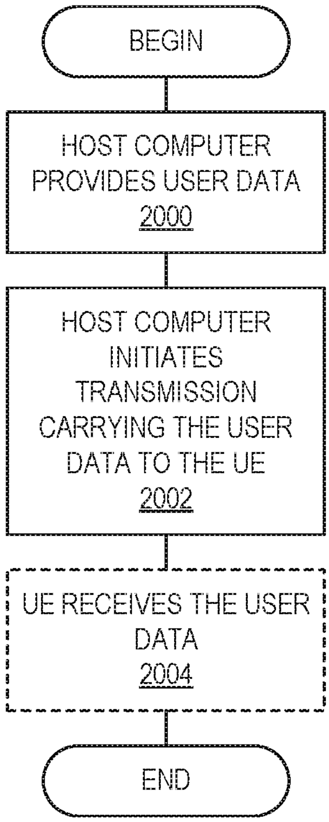
BEGIN
HOST COMPUTER PROVIDES USER DATA 2000
HOST COMPUTER INITIATES TRANSMISSION CARRYING THE USER DATA TO THE UE 2002
UE RECEIVES THE USER DATA 2004
END

FIG. 20

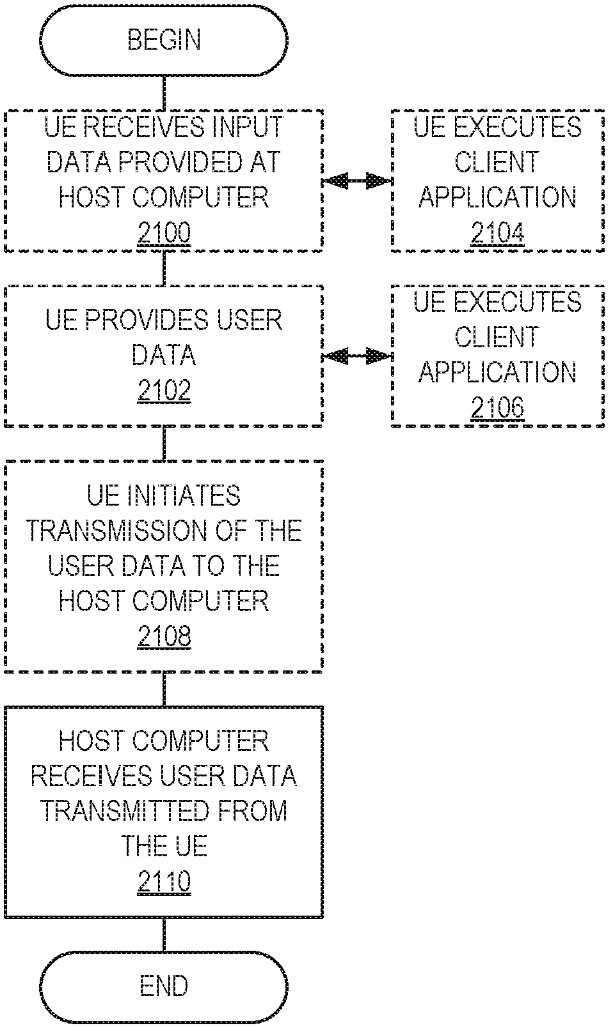
BEGIN
UE RECEIVES INPUT DATA PROVIDED AT HOST COMPUTER 2100
UE EXECUTES CLIENT APPLICATION 2104
UE PROVIDES USER DATA 2102
UE EXECUTES CLIENT APPLICATION 2106
UE INITIATES TRANSMISSION OF THE USER DATA TO THE HOST COMPUTER 2108
HOST COMPUTER RECEIVES USER DATA TRANSMITTED FROM THE UE 2110
END

FIG. 21

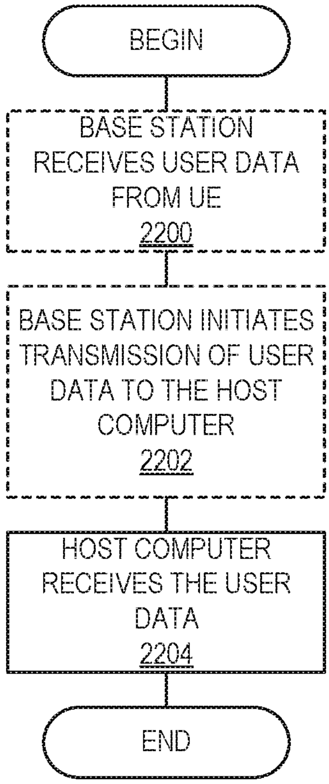
BEGIN
BASE STATION RECEIVES USER DATA FROM UE 2200
BASE STATION INITIATES TRANSMISSION OF USER DATA TO THE HOST COMPUTER 2202
HOST COMPUTER RECEIVES THE USER DATA 2204
END

FIG. 22

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 62976098 A
- CN 110535614 A
- CN 110536399 A
- EP 3567967 A1